# EUROPÄISCHE PATENTSCHRIFT

(11) **EP 0 939 850 B1**
(45) Veröffentlichungstag und Bekanntmachung des Hinweises auf die Patenterteilung: **12.03.2003**
(21) Anmeldenummer: 97952794.2
(22) Anmeldetag: 21.11.1997
(51) Int. Cl.: E01C 5/00, E01C 5/06

(54) **PFLASTERSTEIN-BAUSATZ**
PAVING STONE KIT
SYSTEME DE PAVES

(30) Priorität: 23.11.1996 DE 29620462 U
(43) Veröffentlichungstag der Anmeldung: 08.09.1999
(73) Patentinhaber: Kortmann, Karl, 48465 Schüttorf (DE)
(72) Erfinder: Kortmann, Karl, 48465 Schüttorf (DE)
(74) Vertreter: Busse & Busse Patentanwälte
(86) Internationale Anmeldenummer: EP9706523
(87) Internationale Veröffentlichungsnummer: WO98023816

(56) Entgegenhaltungen:
- WO-A-88/06207
- DE-A- 3 020 893
- DE-A- 3 409 114
- DE-A- 4 400 159
- DE-U- 1 988 248
- DE-U- 7 031 577
- DE-U- 8 907 749
- DE-U- 9 201 265
- DE-U- 9 211 118
- DE-U- 9 403 826

## Beschreibung

Die Erfindung betrifft einen Pflasterstein-Bausatz zur Bildung eines geschlossenflächigen Pflastersteinverbundes gemäß dem Oberbegriff des Anspruches 1 (siehe z.B.die DE-A-3020893).

Bei bekannten Pflasterstein-Bausätzen dieser Art wird ein mit der Kontur eines Secksecks geformter Grundstein verwendet und gemeinsam mit jeweiligen Füll- bzw. Ausgleichssteinen zur Bildung eines geschlossenflächigen Pflastersteinverbundes verlegt. An den gradlinigen Begrenzungen der Verlegefläche verbleiben aber trotz verhandener Füll- und Ausgleichssteine Restflächen, in die zum Ausfüllen ein von einem der sechseckigen Grundsteine abgeschnittener Teilstein eingesetzt werden muß, damit der Pflastersteinverbund vollflächig ist. Zusätzlich zu dem mit dem Schneidvorgang verbundenen hohen Aufwand bilden diese abgeschnittenen Teilsteine in stark beanspruchten Fahrflächen eine die Beständigkeit und Dichtigkeit des Gesamtverbunds nachteilig beeinflussende Gefahrenstelle.

Der Erfindung liegt die Aufgabe zugrunde, einen Pflasterstein-Bausatz zu schaffen, der ohne durch Schneiden gebildete Sondersteine die Bildung eines geschlossenen, abdichtbaren Pflastersteinverbundes ermöglicht, in dem sowohl die Grund- als auch die Füll- und Ausgleichssteine auch bei hoher punktueller Belastung lagestabil sind und durch Dichtmittel im Fugenbereich eine langzeitstabile Dichtigkeit gewährleistet ist.

Die Erfindung-löst diese Aufgabe mit einem Pflasterstein-Bausatz mit den Merkmalen des Anspruches 1. Hinsichtlich wesentlicher weiterer Ausgestaltungen wird auf die Ansprüche 2 bis 21 verwiesen.

Mit dem erfindungsgemäßen Pflasterstein-Bausatz ist mit wenigen Füll- bzw. Ausgleichssteinen und dem an sich bekannten Sechseck-Stein ein lückenlos kombinierbares Belagsystem geschaffen, das ohne Schneidarbeiten eine schnelle und vollständige Ausfüllung eines geradlinig begrenzten Flächenbereiches ermöglicht. Durch eine belastungsoptimierte Umrißkontur sämtlicher Einzelsteine ist ein Verbund geschaffen, der keine Gefahrenpunkte bei Belastung durch in beliebiger Richtung rollende Fahrzeugräder darbietet, wobei der Pflastersteinverbund auch in seinen Randbereichen hohe Gewichts- und Rollbelastungen ohne Lockerungen von Einzelsteinen sicher aufnehmen kann.

Durch Vermeidung von spitzen Eckwinkeln in den Umrißformen sämtlicher Pflastersteine des Bausatzes und durch eine an den Randkanten der Steine umlaufend angeformte Randabsenkung zum Seitenrandbereich hin können die Steine in der Verlegestellung auch geringfügige Versackungen des Unterbaus und eine damit einhergehende Schrägstellung so aufnehmen, daß auch bei wiederholter Belastung vorstehender Ecken Materialausbrüche vermieden sind. Im umlaufenden Fugenbereich zum nebengeordneten Stein hin treten nur minimale Verschiebungen auf, so daß das in der Fuge befindliche Dichtungsmaterial unbeeinträchtigt bleibt. Die Umrißformen der Einzelsteine mit Eckwinkeln von gleich oder größer 90° verwirklichen Größenverhältnisse, bei denen das Verhältnis von Breite zu Länge jeweils einen Wert von 1 : 1,3 nicht überschreitet. Diese optimalen geometrischen Verhältnisse bilden auch bei beliebiger Steingröße die Grundlage für einen stabilen Pflasterverbund auch bei hohen Belastungen als Fahrfläche.

Ein derartiges Pflasterstein-System ist in beliebigen Fahrtrichtungen belastbar, so daß der Pflasterverbund bevorzugt als Fahrbahnbelag im Bereich von Tankstellen, auf Umschlagplätzen mit Containerfahrzeugen, Verladestationen und dgl. Industrieflächen einsetzbar ist und eine zuverlässige Abdichtung zum Untergrund erbringt. Insbesondere kann mit einem derartigen Pflasterverbund ein aus im wesentlichen einstückig vergossenem Beton bestehender Fahrbahnbelag ersetzt werden, wobei spaltenförmige Rißbildungen und Absenkungen in der Fahrfläche vermieden sind.

Weitere Einzelheiten und Vorteile der Erfindung ergeben sich aus der nachfolgenden Beschreibung und der Zeichnung, die ein Ausführungsbeispiel eines erfindungsgemäßen Pflasterstein-Bausatzes veranschaulicht. In der Zeichnung zeigen:
- Fig. 1: eine Draufsicht eines in Form eines regelmäßigen Sechsecks ausgebildeten Grundsteins des erfindungsgemäßen Pflasterstein-Bausatzes,
- Fig. 2 und Fig. 3: jeweilige Draufsichten eines als Rechteck ausgebildeten Füll- bzw. Ausgleichssteines,
- Fig. 4: eine Draufsicht auf einen Füll- bzw. Ausgleichsstein in Form eines Fünfecks mit einer stumpfwinkligen Ecke,
- Fig. 5: eine Draufsicht eines Füll- bzw. Ausgleichssteines ähnlich Fig. 4 in Form eines Fünfeckes mit divergierenden Randkanten,
- Fig. 6: eine Draufsicht auf einen Füll- bzw. Ausgleichsstein in Form eines unregelmäßigen Sechsekkes bestehend aus einem Rechteck- und einem Trapezflächenbereich,
- Fig. 7 und Fig. 8: jeweilige Füll- bzw. Ausgleichssteine in Form unregelmäßiger Sechsecke mit einer dreieckigen Teilfläche,
- Fig. 9: eine Draufsicht eines Füll- bzw. Ausgleichssteines in Form eines unregelmäßigen Fünfeckes und unterschiedlichen Randkantenlängen,
- Fig. 10 bis Fig. 13: jeweilige Ausschnittsdarstellungen eines Pflastersteinverbundes im Bereich einer eine stumpfwinklige Ecke bildenden Verlegegrenze,
- Fig. 14: eine Ausschnittsdarstellung eines Pflastersteinverbundes mit Bausätzen bzw. Einzelsteinen unterschiedlicher Grundsteingröße,
- Fig. 15: eine Draufsicht eines geschlossenflächigen Pflastersteinverbundes im Bereich einer Tankstelle,
- Fig. 16: eine Draufsicht auf einen dreiseitig mit Randsteinen abgeschlossenen Pflastersteinverbund ähnlich Fig. 15 mit einer mittleren Dachprofilierung,
- Fig. 17: eine Querschnittsdarstellung der Dachprofilierung gemäß Fig. 16,
- Fig. 18: eine Querschnittsdarstellung eines Einzelsteines mit Dachkontur gemäß einer Linie I - I in Fig. 16,
- Fig. 19: eine Querschnittsdarstellung von zwei die Dachkontur bildenden Einzelsteinen gemäß einer Linie II - II in Fig. 16,
- Fig. 20: eine Ausschnittsdarstellung eines Pflastersteinverbundes mit mehreren sechseckigen Grundsteinen, die im Bereich gegenüberliegender Seitenflächen einen von 120° abweichenden Schrägungswinkel aufweisen,
- Fig. 21: eine Ausschnittsdarstellung ähnlich Fig. 20 mit einer an der Verlegefläche einen Randkantenabsatz bildenden Schrägstellung,
- Fig. 22 und Fig. 23: jeweilige Einzeldarstellungen eines schrägen Grundsteins in einer eine rechte und einer eine linke Schrägstellung bildenden Ausführungsform,
- Fig. 24: eine Ausschnittsdarstellung einer Verlegefläche mit schrägen Grundsteinen und einem Füll- bzw. Ausgleichsstein ähnlich Fig. 9,
- Fig. 25 und Fig. 26: jeweilige Einzeldarstellungen des Füll- bzw. Ausgleichssteins ähnlich Fig. 9 in einer spiegelbildlichen Ausführung,
- Fig. 27: eine Querschnittsdarstellung eines Einzelsteins ähnlich Fig. 17 mit einer V-Profilform,
- Fig. 28: eine Querschnittsdarstellung von zwei eine Rinne bildenden Einzelsteinen mit V-Profilform,
- Fig. 29: eine Draufsicht eines Füll- bzw. Ausgleichssteins ähnlich Fig. 5, und
- Fig. 30: eine Draufsicht eines Füll- bzw. Ausgleichssteins ähnlich Fig. 9,
- Fig. 31: eine Draufsicht auf einen Pflasterverbund mit einer Innenöffnung belassenden Formsteinen,
- Fig. 32: eine Draufsicht ähnlich Fig. 31 mit in der Innenöffnung befindlichen Formsteinen,
- Fig. 33: eine Draufsicht des Sechsecksteins ähnlich Fig. 22 in einer dritten Ausführungsform,
- Fig. 34: eine Draufsicht einer Pflasterung mit den Sechsecksteinen gemäß Fig. 33,
- Fig. 35: eine Draufsicht einer einen Trog oder eine Wanne bildenden Pflasterung mit Bereichen G und A,
- Fig. 36: eine Ausschnittsdarstellung gemäß einer Linie III-III in Fig. 35, und
- Fig. 37: eine Draufsicht auf eine einen Trog oder eine Wanne bildende Pflasterung mit einer Rinne W in den Steinoberseiten.

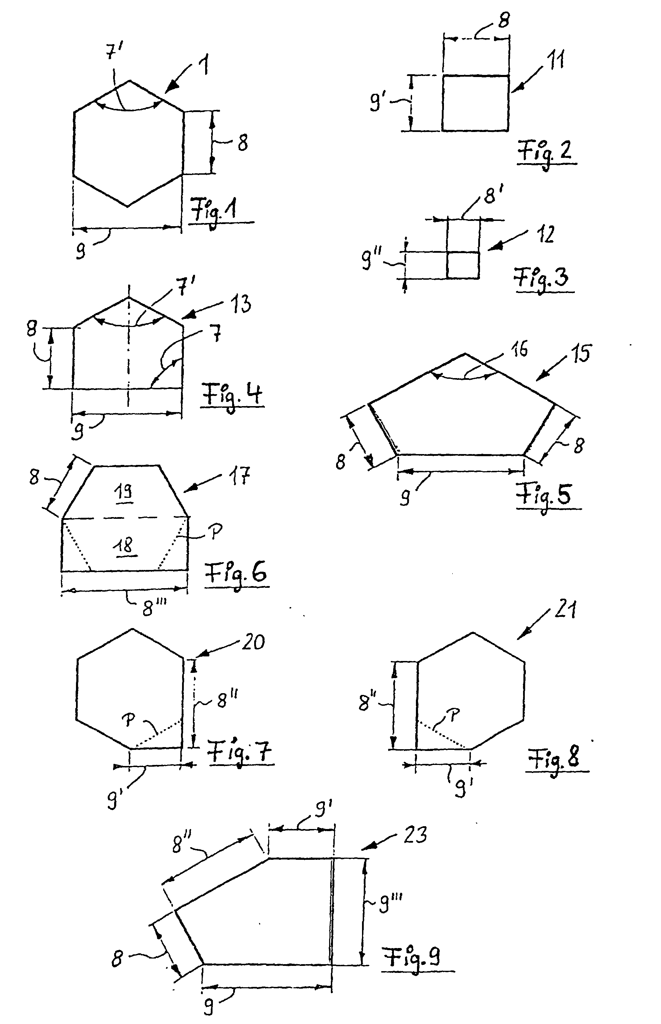

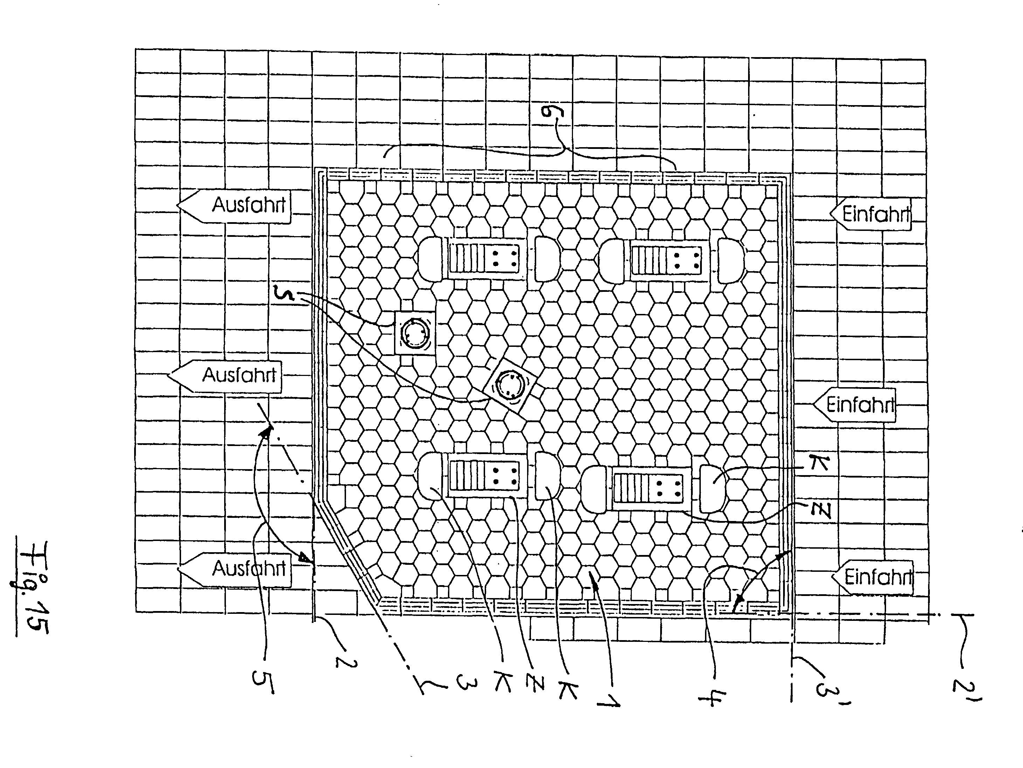

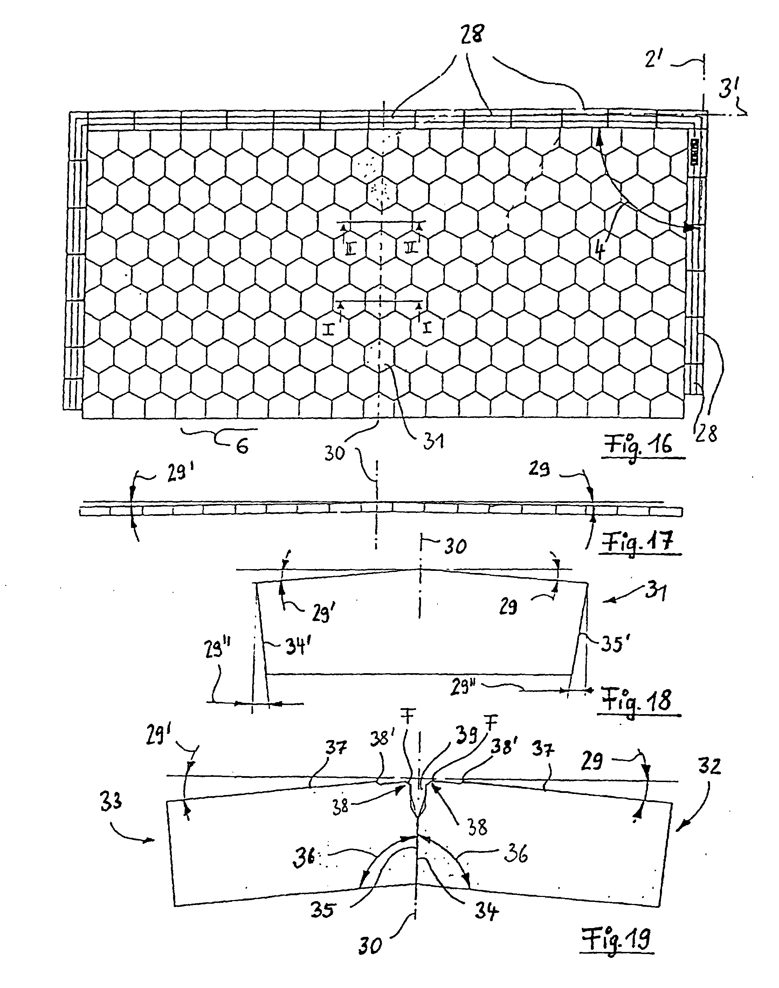

In Fig. 1 ist ein insgesamt mit 1 bezeichneter Grundstein in Form eines an sich bekannten regelmäßigen Sechsecks für einen Pflasterstein-Bausatz dargestellt , der mit nachfolgend näher beschriebenen Sondersteinen zur Bildung eines geschlossenflächigen Pflastersteinverbundes (Fig. 15; Fig. 16) vorgesehen ist, wobei dieser jeweilige gradlinige Außenbegrenzungen 2, 3 bzw. 2', 3' und einen Eckwinkel 4 von 90° bzw. einen Eckwinkel 5 von größer als 90° aufweist.

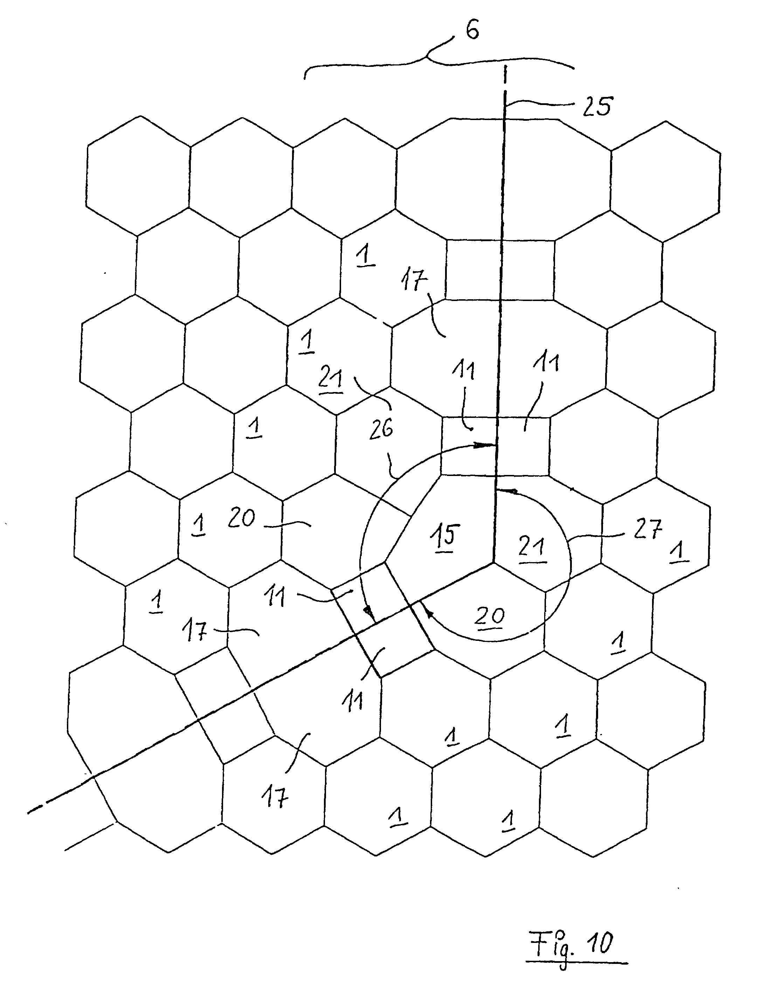

Der Grundstein 1 bildet dabei mit Füll- bzw. Ausgleichssteinen verschiedener Umrißformen einen in Fig. 10 bis 13 prinzipiell veranschaulichten Pflasterstein-Bausatz 6, bei dem die Einzelsteine zumindest in der Länge einer Randkante oder in zumindest einem ihrer Eckwinkel übereinstimmen.

Die erfindungsgemäß ausgebildeten Füll- bzw. Ausgleichssteine (Fig. 2 bis Fig. 9) haben nur Eckwinkel 7, 7' von gleich oder größer 90° und weisen zumindest eine Randkante mit einer Länge auf, die mit der Grundlänge 8 der Kanten des Grundsteines 1 übereinstimmt, einer halben Grundlänge 8' entspricht oder mit der Maulweite 9 des Grundsteins übereinstimmt. Bei Anordnung einer stumpfwinkligen Ecke 7' in mittiger Gegenüberlage zu einer gegenüber der Grundlänge 8 in ihrer Länge vergrößerten Randkante weisen die an diese Randkante angrenzenden Randkanten jeweils Grundlänge 8 auf.

Auf der Grundlage dieser geometrischen Verhältnisse ist der erfindungsgemäße Pflasterstein-Bausatz 6 auf ein Minimum von Einzelsteinen so reduziert, daß mit geringem Herstellungs- und Verlegeaufwand unterschiedlich konturierte geschlossene Pflastersteinflächen (Fig. 10 bis Fig. 16) optimal ausgefüllt werden können und keinerlei zusätzliche Schneidarbeiten oder dgl. Aufwendungen zur vollständigen Flächenausfüllung erforderlich sind. Der Grundstein 1 für diesen Basatz weist in vorteilhaft handhabbarer Größe eine Maulweite 9 von mehr als 300 mm auf, wobei ein optimales Rastermaß für die Herstellung des Steins und dessen Verlegung mit einer Maulweite von 502 mm erreicht ist. Die Kantenlänge des Grundsteins beträgt dabei 289,8 mm. In Fig. 2 bis Fig. 9 ist mit einer Punkt-Linie P eine auf die Sechseck-Form bezugnehmende Orientierungskante für das Verlegen der Steine angedeutet.

In Fig. 2 ist ein erster Füll- bzw. Ausgleichsstein 11 in Form eines Rechtecks dargestellt, dessen eine Kantenlänge der Grundlänge 8 entspricht und dessen andere Kantenlänge der halbem Maulweite 9' entspricht.

Der Füll- bzw. Ausgleichsstein gemäß Fig. 3 ist in einer zweiten Ausführungsform als Rechteck 12 ausgebildet, dessen eine Kantenlänge der halben Grundlänge 8' und dessen andere Kantenlänge einer viertel Maulweite 9'' entspricht.

Eine dritte Ausführungsform des Füll- bzw. Ausgleichssteins gemäß Fig. 4 zeigt ein Fünfeck 13 mit der stumpfwinkligen Ekke 7', die einer Randkante von der Länge der Maulweite 9 mittig gegenüberliegt, wobei diese Randkante zwei parallele Randkanten von Grundlänge 8 verbindet.

In Fig. 5 ist der Füll- bzw. Ausgleichsstein in einer vierten Ausführungsform als Fünfeck 15 mit einer stumpfwinkligen Ekke 16 ausgebildet, die einer Randkante von der Länge der Maulweite 9 mittig gegenüberliegt, wobei diese zwei divergierende Randkanten von Grundlänge 8 verbindet.

In Fig. 6 ist der Füll- bzw. Ausgleichsstein als ein unregelmäßiges Sechseck 17 ausgebildet, das durch Ergänzung des Grundsteins 1 um zwei dreieckige Teilbereiche eine Umrißform aufweist, die aus einer Rechteckfläche 18 und aus einer gleichschenkligen Trapezfläche 19 mit einer langen Randkante doppelter Grundlänge 8''' zusammengesetzt ist.

In Fig. 7 ist eine sechste Ausführungsform des Füll- bzw. Ausgleichssteines dargestellt, der als ein unregelmäßiges Sechseck 20 ausgebildet ist, das durch Ergänzung eines Grundsteines 1 um eine dreieckige Teilfläche auf einer ersten, rechten Seite eine Randkante von eineinhalbfacher Grundlänge 8'' aufweist, an die sich eine Randkante mit der Länge einer halben Maulweite 9' unter einem 90°-Winkel anschließt.

In der Ausführungsform gemäß Fig. 8 ist der Füll- bzw. Ausgleichsstein als ein unregelmäßiges Sechseck 21 ausgebildet, das durch Ergänzung eines Grundsteines 1 um eine dreieckige Teilfäche auf einer zweiten, linken Seite eine Randkante von eineinhalbfacher Grundlänge 8'' aufweist, an die sich eine Randkante mit der Länge der halben Maulweite 9' unter einem 90°-Winkel anschließt.

Die Darstellung gemäß Fig. 9 zeigt einen Füll- bzw. Ausgleichsstein in einer achten Ausführungsform, wobei dieser Stein als ein unregelmäßiges Fünfeck 23 ausgebildet ist, bei dem eine erste Randkante mit der Länge einer Maulweite 9 unter rechtem Winkel an eine zweite Randkante mit einer dem dreiviertelfachen der Maulweite 9''' entsprechenden Länge angrenzt, bei dem sich an die erste Randkante mit einem 120°-Winkel eine dritte Randkante von Grundlänge 8 anschließt, bei dem sich an die zweite Randkante mit einem 90°-Winkel eine vierte Randkante mit der Länge der halben Maulweite 9' anschließt und bei dem die dritte und die vierte Randkante durch eine fünfte Randkante verbunden sind, die mit der dritten Randkante einen Winkel von 90° und mit der vierten Randkante einen Winkel von 150° anschließt, wobei die fünfte Randkante eine dem eineinhalbfachen der Grundlänge 8'' entsprechende Länge hat.

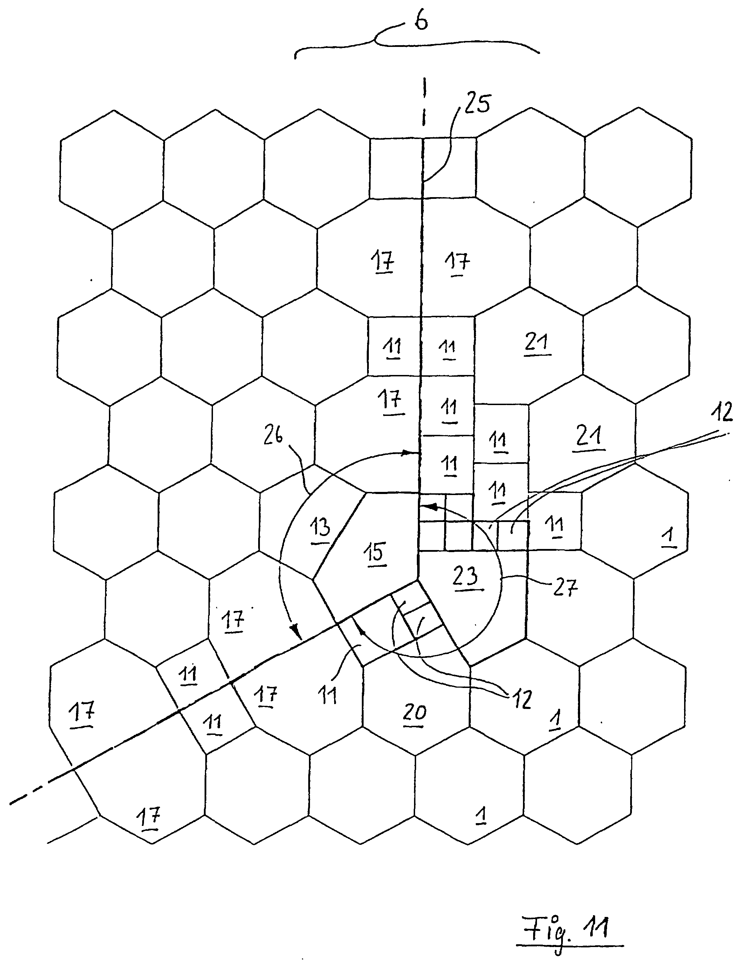

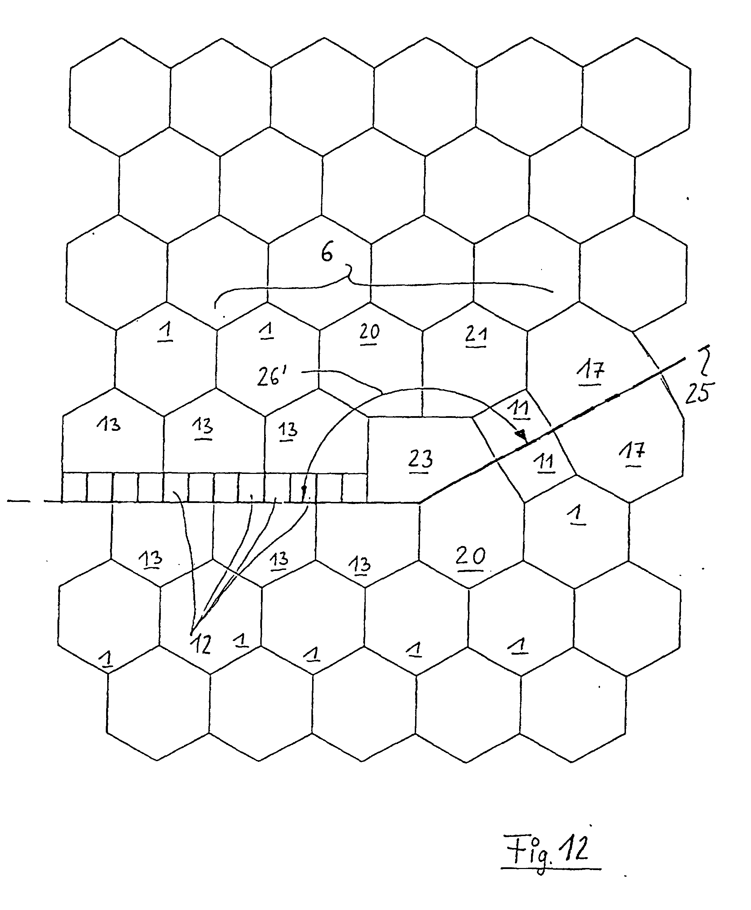

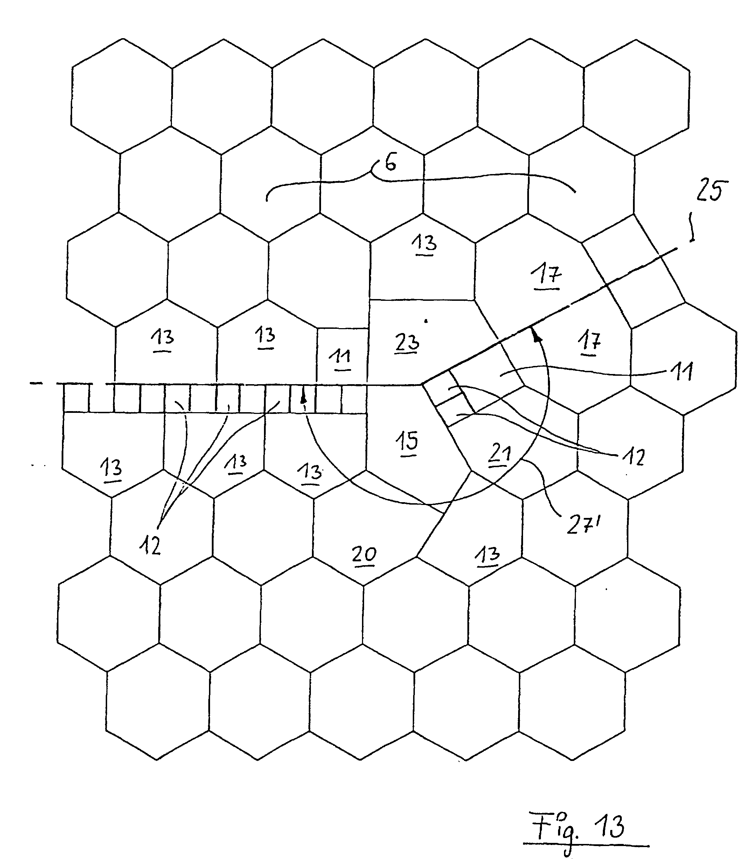

In Fig. 10 bis 13 sind mehrere Verlegebeispiele der vorbeschriebenen Einzelsteine als Pflasterstein-Bausatz 6 prinzipiell veranschaulicht, wobei mit einer Linie 25 eine denkbare Begrenzung einer Verlegekontur mit einer Innenecke 26 bzw. einer Außenecke 27 dargestellt ist. Die Ausführungsform gemäß Fig. 10 und Fig. 11 stellt dabei einen jeweiligen Innenwinkel 26 von 120° dar, zu dem der Außenwinkel 27 die 360°-Ergänzung bildet und in Fig. 12 und 13 ist in ähnlicher Ausführung die Innenecke 26' mit einem Winkel von 150° ausgebildet.

Ausgehend von dieser durch die Linie 25 vorgegebene Begrenzung ist in Fig. 10 und 11 jeweils der Einzelstein 15 unmittelbar im Eckbereich der Linie 25 angeordnet, so daß über die an dem Stein 15 angrenzenden Einzelsteine 11, 20 und 21 sowie die nebengeordneten Einzelsteine eine vollständige und lückenlose Eckausfüllung geschaffen ist, an die sich die sechseckigen Steine 1 in der Verlegefläche anschließen. In Fig. 11 ist der im Bereich der Innenecke 26 angeordnete Einzelstein 15 innenseitig mit dem Einzelstein 13 und im gegenüberliegenden Bereich der Außenecke 27 mit dem Einzelstein 23 sowie den Rechtecksteinen 11 und 12 kombiniert. Die Darstellungen in Fig. 12 und Fig. 13 zeigen weitere Varianten im Bereich der Begrenzungsecke, wobei beidseits der Linie 25 mit einem Winkel von 150° eine vollständige Flächenausfüllung mit unterschiedlichem Fugenbild erreicht ist.

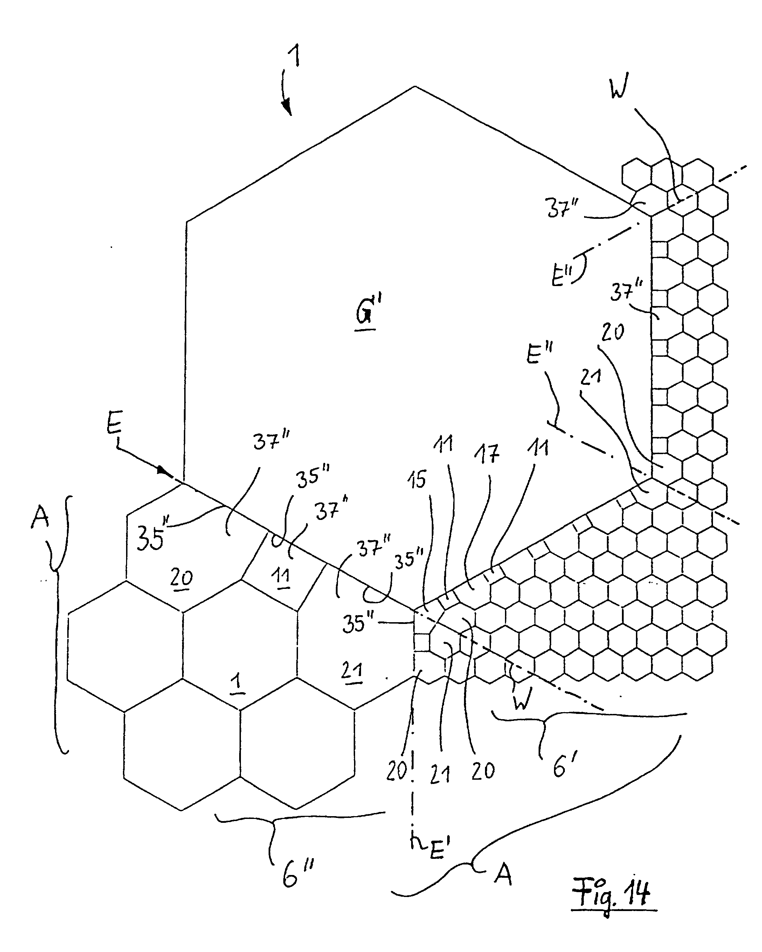

In Fig. 14 ist ein weiterer denkbarer Verlegeausschnitt veranschaulicht, bei dem mit unterschiedliche Größen aufweisende Einzelsteine jeweilige Pflasterstein-Bausätze 6' und 6'' vorgesehen sind, die mit einem zu diesem vergrößerte Abmessungen aufweisenden Grundstein 1 gemeinsam verlegt sind, so daß damit die Vielfalt von Verlegemöglichkeiten des erfindungsgemäßen Pflasterstein-Bausatzes beispielhaft deutlich wird. Der Bausatz 6, 6', 6'' kann dabei ausgehend von dem Grundstein 1 zweckmäßig mit jeweils 2-fach, 4-fach, 8-fach usw. vergrößerter Grundlänge 8 und/oder Maulweite 9 versehen sein.

In Fig. 15 ist eine geschlossenflächige Ausführung des Pflastersteinverbundes dargestellt, wobei jeweilige rechteckige Schachtabdeckungen S und Zapfsäulen Z mit den Steinen des Pflasterstein-Bausatzes 6 vollflächig in einem paßgenauen Raster umlegt sind. Ein jeweils vor bzw. hinter der Zapfsäule Z befindlicher Inselkopf K ist in zweckmäßiger Ausführung auf die Pflasterfläche aufgeklebt.

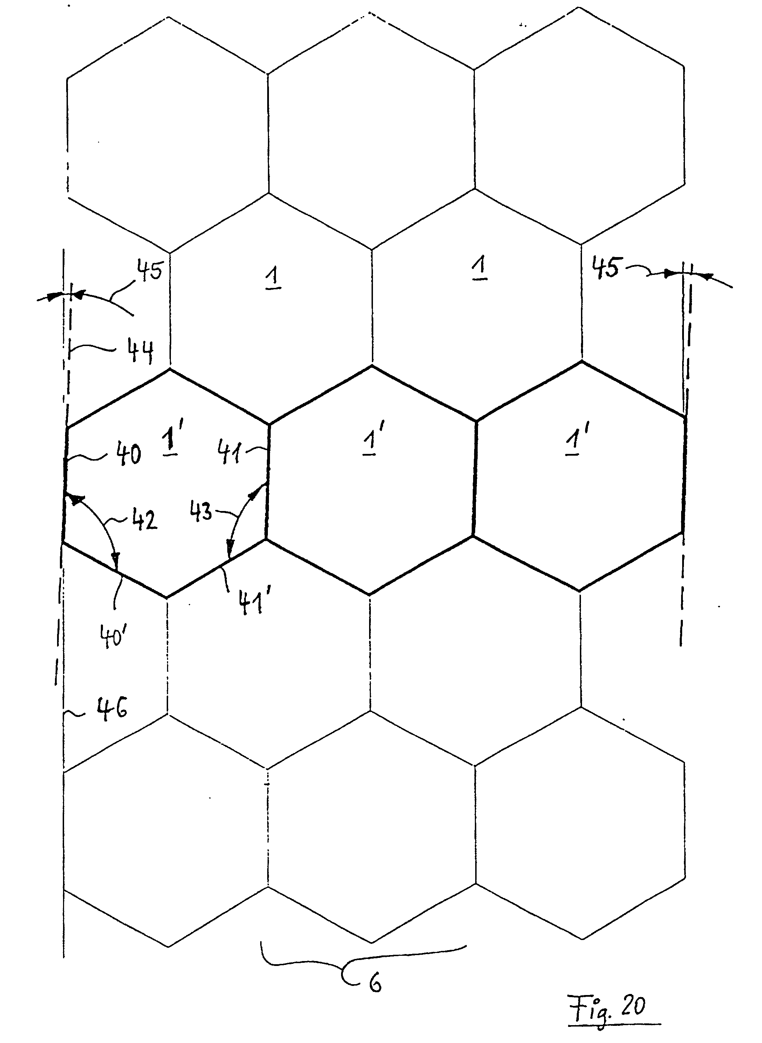

Die Ausführungsform gemäß Fig. 16 zeigt einen dreiseitig mit Randsteinen 28 begrenzten Fahrbelag, auf dem die jeweiligen Oberseiten der Grund- und Füll- bzw. Ausgleichssteine eine mit einer Schräge 29, 29' ausgebildete Dachkontur (Fig. 17) aufweisen. Diese Dachkontur ist mit einer Firstlinie 30 versehen, die entlang einer Verbindungslinie von zwei Eckpunkten des jeweiligen Einzelsteines 31 (Fig. 18) oder mittig zwischen zwei gegenüberliegenden Randkanten des Grundsteins 1 verläuft. Ebenso ist denkbar, die Dachkontur durch Einzelsteine 32, 33 zu bilden, an deren Seitenfläche 34, 35 jeweils ein Winkel 36 vorgesehen ist, der 90° geringfügig überschreitet, so daß in der dargestellten Einbaulage (Fig. 19) über die aneinanderliegenden Seitenflächen 34, 35 die jeweiligen Schrägungswinkel 29, 29' definiert sind. In Fig. 18 ist der Stein 31 an seinen Seitenflächen 34' und 35' mit der Schräge 29" versehen, so daß damit beidseits anliegende Steine (nicht dargestellt) die Dachkontur fortsetzen. In Fig. 27 ist der eine V-Profilform mit Schrägungswinkeln 29''' aufweisende Einzelstein 31' dargestellt, wobei dieser Stein mit einer in der Verlegefläche wirksamen Rinne W (als Alternative zum Dachstein 31) ausgebildet (Fig. 16, Linie 30) ist. In Fig. 28 sind zwei Steine 32', 33' dargestellt, deren im Bereich der Linie 30' aneinanderliegende Seitenflächen einen 90° geringfügig unterschreitenden Winkel 36' aufweisen, so daß damit die Rinne W gebildet wird. An der rechtwinkligen Seitenfläche 35" der Steine 32', 33' können weitere Steine angelegt werden.

Die Schnittdarstellungen gemäß Fig. 19 bzw. 28 verdeutlichen außerdem, daß die jeweiligen Grund- und Füll- bzw. Ausgleichssteine zumindest entlang einer einzelnen Randkante einen gegenüber der innenseitig angrenzenden Oberfläche 37 des Steins abgesenkten Oberflächenbereich 38 aufweisen. Diese Absenkung 38 bildet dabei eine Fase F zur Seitenfläche und einen Konturübergang 38' (Radius) zur jeweiligen Oberseite 37 hin. In zweckmäßiger Ausführung sind sämtliche Einzelsteine der vorbeschriebenen Pflasterstein-Bausätze 6, 6' und 6'' allseitig mit dem abgesenkten Oberflächenbereich 38 ausgebildet, so daß in der Verlegestellung eine gleichmäßig umlaufende Fuge 39 (Fig. 19, Fig. 28) gebildet ist und in dieser ein nicht näher veranschaulichtes Dichtungsmittel eingebracht werden kann. Mit der Kontur 38, 38', F im Bereich der Absenkung ist der unmittelbar angrenzende Seitenrand im oberen Kantenbereich gegen Überbelastungen durch Fahrzeugräder geschützt.

In Fig. 20 ist eine weitere denkbare Ausführungsform eines Grundsteines 1' veranschaulicht, die mit einer einzelnen bzw. zwei gegenüberliegenden Seitenflächen 40, 41 versehen ist, die zur jeweils benachbarten Seitenflächen 40', 41' einen von 120° geringfügig abweichenden Winkel 42, 43 zur Bildung einer schräggestellten Anschlußfläche 44 einschließt, wobei diese beispielsweise unter einem Winkel 45 verläuft, der um eine 2°- bis 4°-Schrägstellung von einer Bezugslinie 46 abweicht.

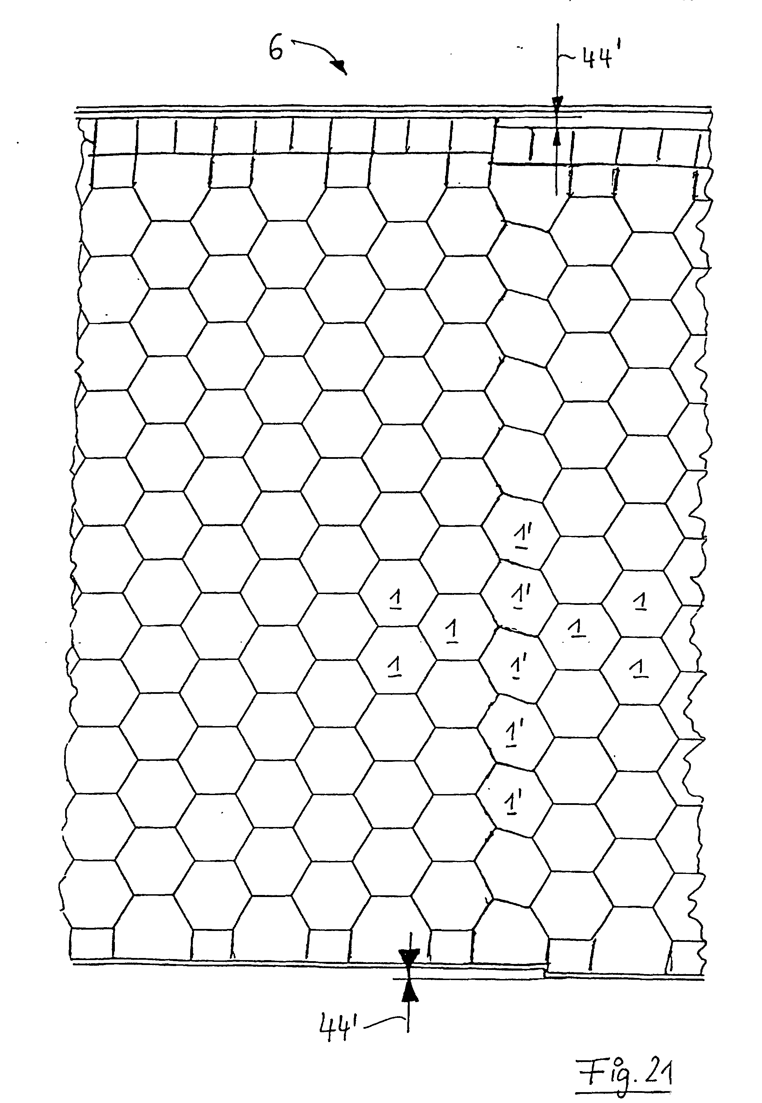

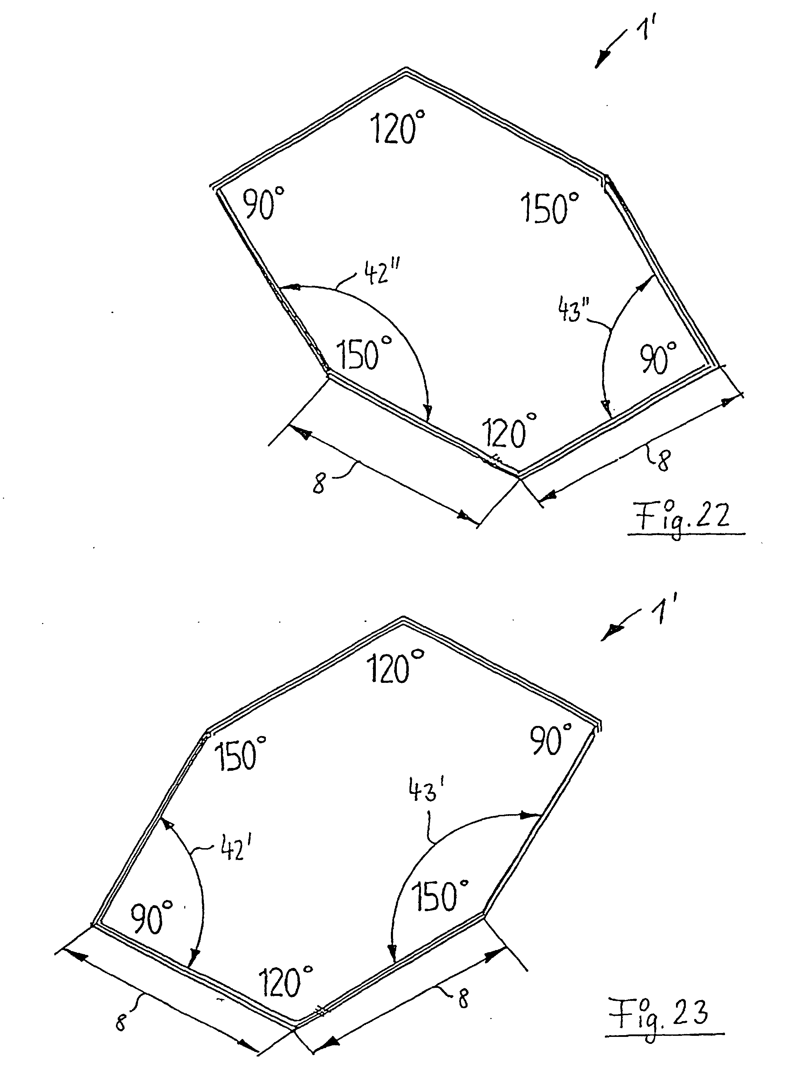

In Fig. 21 sind mehrere der schrägen Grundsteine 1' in einer zweiten Anwendung dargestellt, wobei ein Randkantenabsatz 44' des Pflasterverbundes gebildet ist. Die Einzeldarstellungen gemäß Fig. 22 und Fig. 23 zeigen den Stein 1' mit seinen jeweiligen Eckwinkeln, die sich durch die Winkel 42', 43', 42'' und 43" ergeben und eine weitere Variation des Verlegemusters in dem Pflasterverbund ermöglichen.

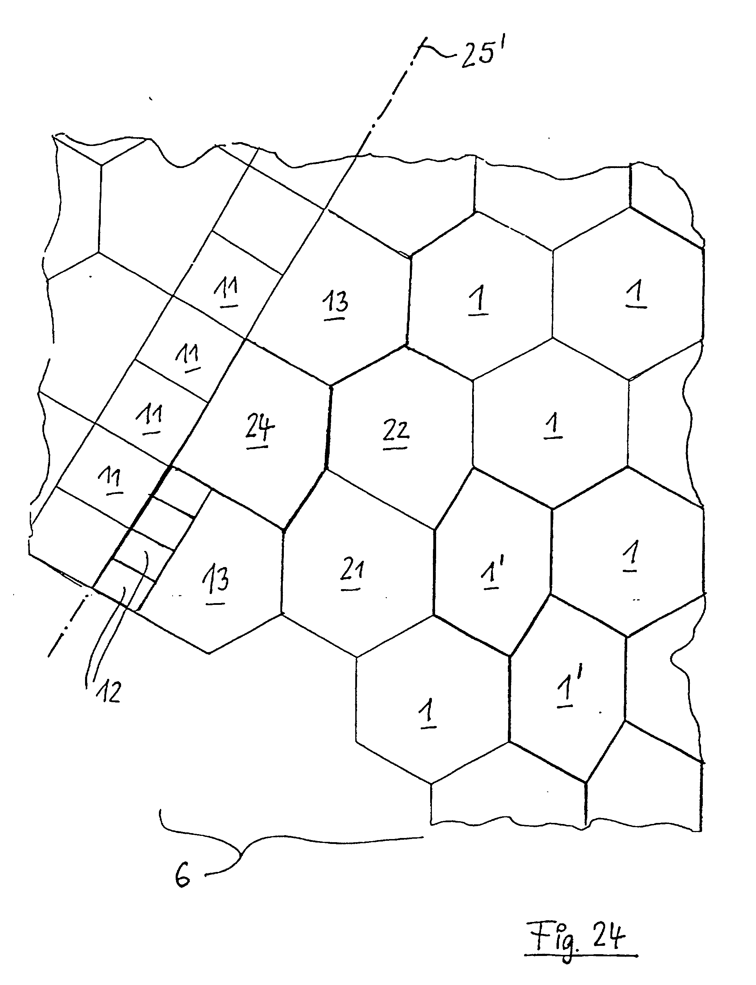

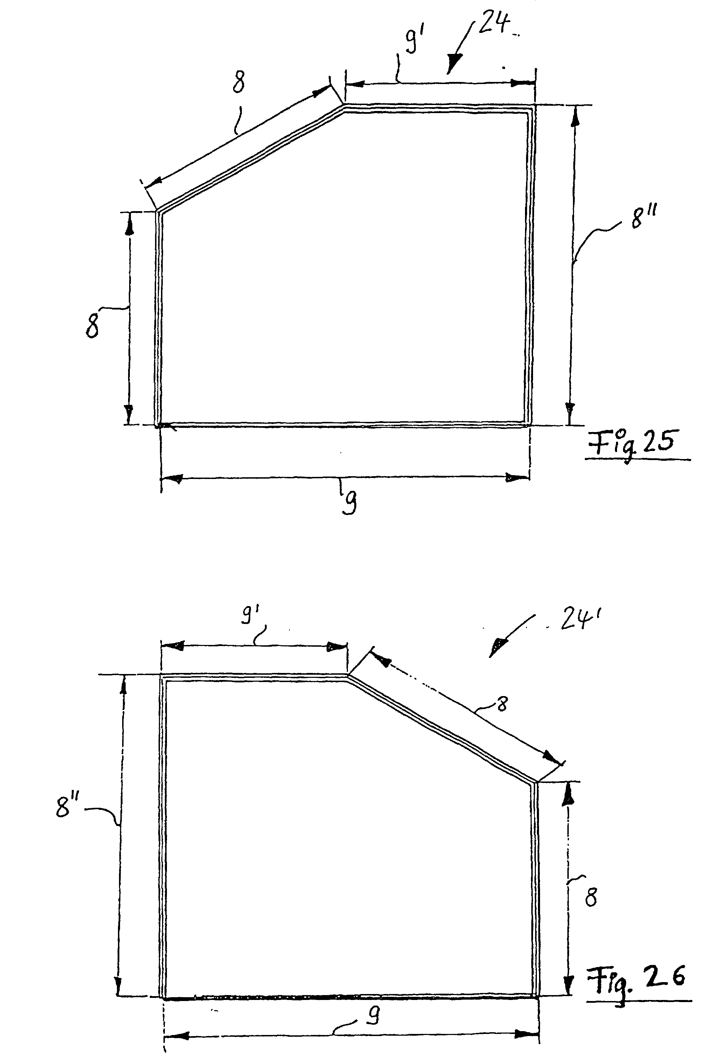

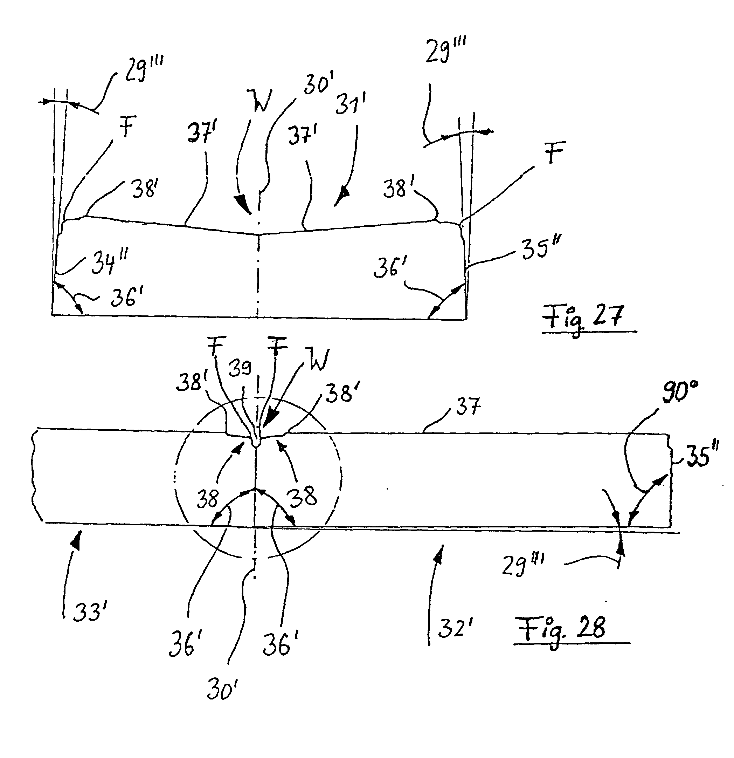

Der in Fig. 24 dargestellte Pflasterverbund zeigt im Nahbereich der Grenzlinie 25' einen Füll- bzw. Ausgleichsstein in einer neunten bzw. zehnten Ausführungsform (Fig. 25, 26), wobei dieser Stein als ein Fünfeck 24, 24' ähnlich Fig. 9 ausgebildet ist. Der Stein 24 ist mit einer ersten Randkante mit Maulweite 9 versehen, an die sich einerseits eine zweite Randkante mit Grundlänge 8 unter einem 90°-Winkel und andererseits eine dritte Randkante mit eineinhalbfacher Grundlänge 8'' unter einem 90°-Winkel anschließen. An die dritte Randkante schließt sich ebenso mit einem 90°-Winkel eine vierte Randkante von halber Maulweite 9' an und diese vierte Randkante ist mit der zweiten Randkante über eine fünfte Randkante von Grundlänge 8 verbunden (Fig. 25). Die Darstellung gemäß Fig. 26 zeigt den vorbeschriebenen Fünfeck-Stein 24' in einer spiegelbildlichen Ausführungsform mit gleichen geometrischen Verhältnissen im Bereich seiner Winkel und Randkanten.

Der vorbeschriebene, vollflächig verlegbare Pflasterstein-Bausatz kann in seiner Belastbarkeit in Quer- und Längsrichtung durch Fahrzeugräder noch dadurch verbessert werden, daß die aneinanderliegenden Seitenflächen 34, 35; 34', 35' der Einzelsteine mit einer Stützprofilierung versehen sind. Diese Stützprofilierung ist in einer zweckmäßigen Ausführung für einen Sechseckstein bekannt (DE-U-94 09 076.9) und kann bei der Herstellung der vorbeschriebenen Einzelsteine angeformt werden.

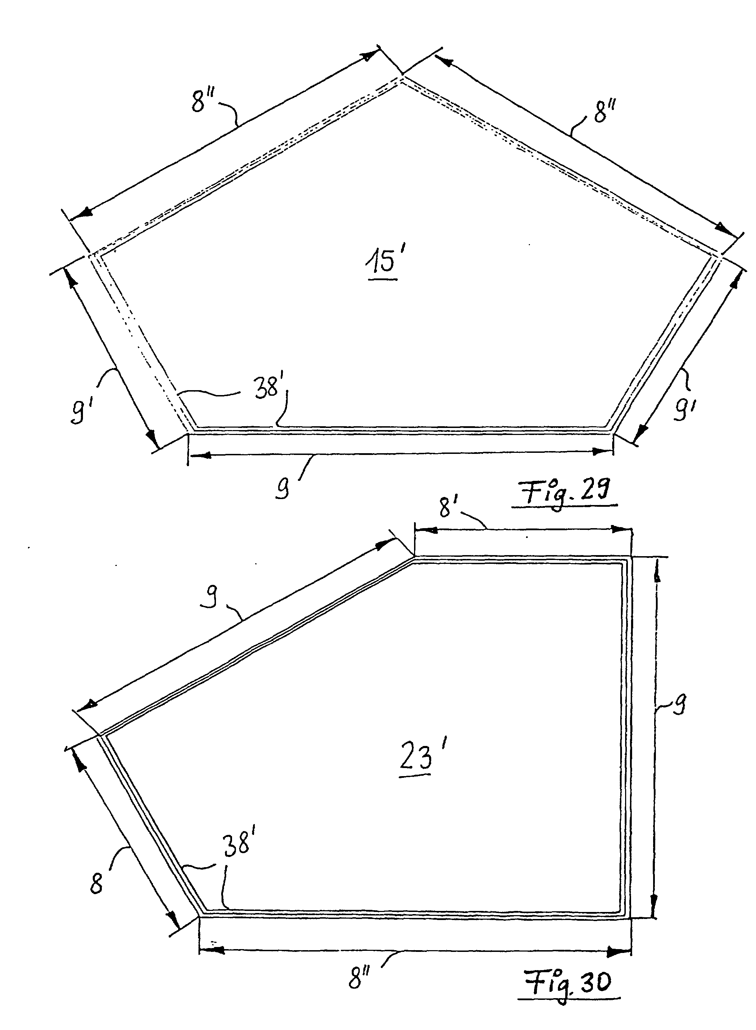

In Fig. 29 und Fig. 30 sind die in ihrer Umrißkontur dem Stein 15 (Fig. 5) und dem Stein 23 (Fig. 9) entsprechenden Einzelsteine 15' und 23' dargestellt, wobei diese in den Abmessungen ihrer jeweils fünf Randkanten so variiert sind, daß mit den prinzipiell vorgegebenen Maßen von Grundlänge und Maulweite (bzw. deren Teile oder Vielfache) weitere Verlegemöglichkeiten erreichbar sind. Gleichzeitig werden die geometrischen Verhältnisse des Pflasterstein-Bausatzes 6 insgesamt beibehalten, so daß über eine konstruktive Anpassung beim Verlegen der Einzelsteine beliebige Flächen ausgefüllt und dazu die Einzelsteine 11, 12, 13, 17, 20 und/oder 21 jeweils entsprechend in ihren Randkanten-Maßen als Sondersteine angepaßt sind.

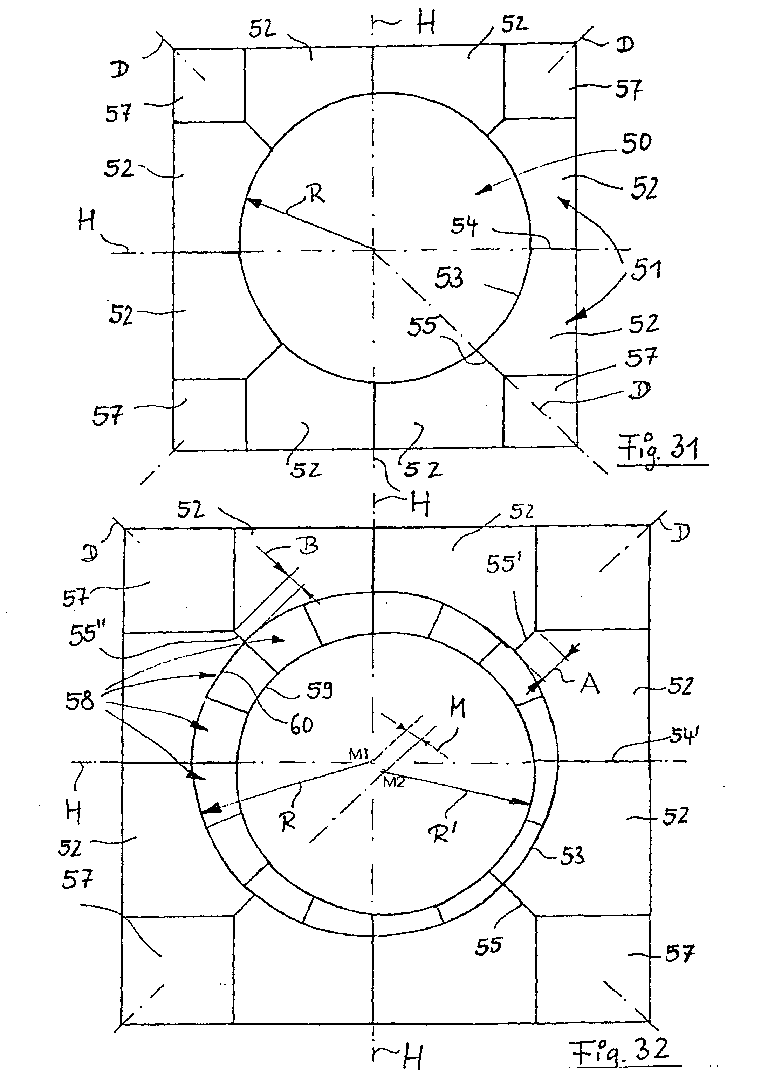

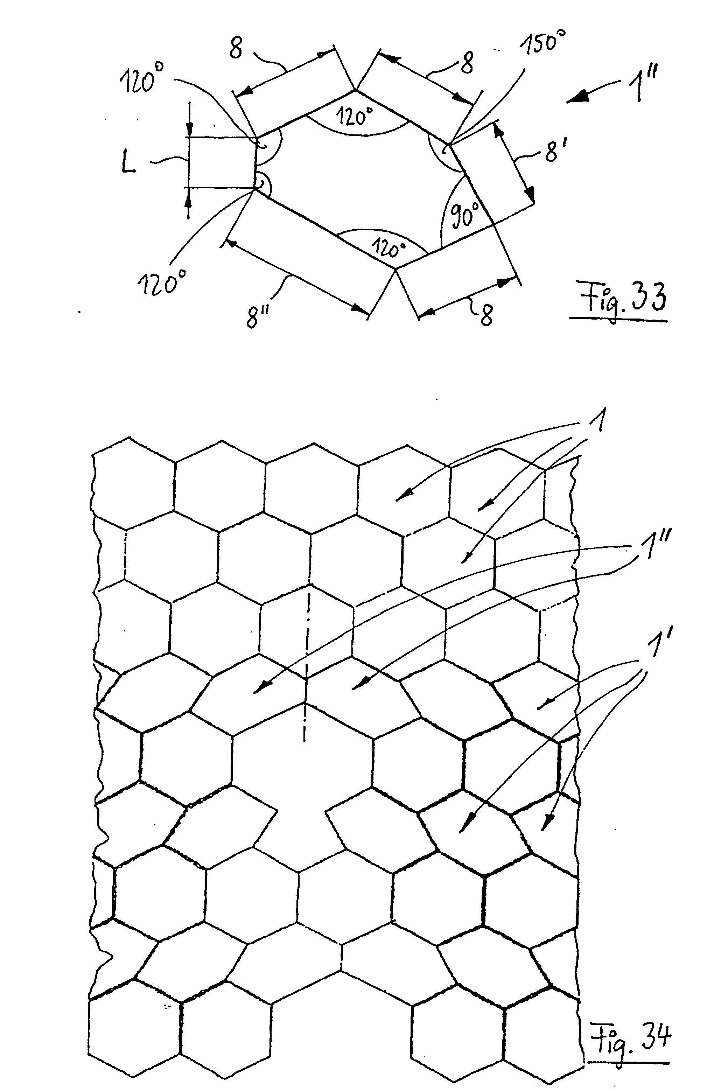

In Fig. 31 ist ein geschlossenflächiger Pflastersteinverbund mit geradliniger Außenbegrenzung dargestellt, wobei in diesem Verbund eine Innenöffnung 50 zur Aufnahme eines Schachtdeckels oder dgl. Einbauteil (nicht dargestellt) vorgesehen ist. Dieser Bausatz weist dabei jeweilige an die Kontur der Innenöffnung 50 angepaßte Formsteine 51 auf, die als jeweilige nur Eckwinkel von gleich oder größer 90° aufweisende Fünfecksteine 52 ausgebildet sind. Im Bereich einer Seitenfläche 53 sind die Fünfecksteine mit einer einen Kreisbogen bildenden Kontur versehen, die einerseits in eine die Seitenhalbierende H der geradlinigen Außenbegrenzung des Verbundes bildende Anlagefläche 54 und andererseits in eine die Diagonale D bildende Anlagefläche 55 übergeht.

In der Einbaulage (Fig. 31, Fig. 32) sind jeweils acht Fünfecksteine 52 derart angeordnet, daß mit ihrer nach innen gerichteten Kreisbogenkontur ein Vollkreis als Innenöffnung 50 gebildet ist. Die Anlageflächen 55 im Bereich der beiden Diagonalen D grenzen zu den Eckbereichen hin an quadratische Füllsteine 57, die die geradlinige Außenbegrenzung vervollständigen. Dieser Verbund der Fünfecksteine 52 und der Füllsteine 57 ist überaus stabil und über eine entsprechende Bemessung der Anlageflächen 54 und 55 (Länge A, Länge B in Fig. 32) ist der Bausatz an unterschiedliche Bedingungen in einer Gesamtpflasterung (Fig. 15) anpaßbar.

Die Ausführungsform gemäß Fig. 32 verdeutlicht eine Ergänzung des vorbeschriebenen Bausatzes dadurch, daß dieser mit Bogenfüllsteinen 58 versehen ist, die einen asymmetrischen verkleinerten Innenkreis R' bilden. Diese sind mit zwei kreisbogenförmigen Seitenflächen 59, 60 versehen, die einer-seits an der Kontur des Fünfecksteines 52 anliegen und andererseits den Innenkreis R' der Innenöffnung 50' definieren. Die dargestellte Mittelpunktsverschiebung M verdeutlicht eine Möglichkeit, den verkleinerten Innenkreis R' asymmetrisch zum Innenkreis R der Fünfecksteine 52 anzuordnen und damit eine optimale Anpassung an das in die Pflasterung (Fig. 15) zu integrierende Einbauteil zu erreichen.

In Fig. 33 ist der als Sechseckstein vorgesehene Grundstein 1" in einer schrägen Ausführung ähnlich Fig. 22 darge-stellt. Die als rechte oder linke Ausführung mit einer entsprechenden spiegelbildlichen Kontur versehenen Steine 1'' können auch paarweise verlegt werden (Fig. 34), wobei deren kurze Seitenkanten L (Abmessungen: 0,86 x Grundlänge 8) aneinanderliegen und die jeweiligen anderen Seitenkanten mit einer Grundlänge 8, 8' bzw. 8" in der Pflasterung an Grundsteine der Kontur 1 bzw. 1' angrenzen. Der Grund-stein 1'' weist jeweilige Eckwinkel von 90° oder mehr auf und die Seitenkanten sind entsprechend den Anlagebedingungen im Pflasterverbund mit Kantenlängen entsprechend der Grundlänge 8 versehen, so daß aufbauend auf dieser Grundlänge mit einem Größenfaktor von 0,43; 0,5; 0,86; 1,0; 1,5; 1,72; 2,0 usw. eine Anpassung an das Rastermaß der Pflasterung erreicht ist.

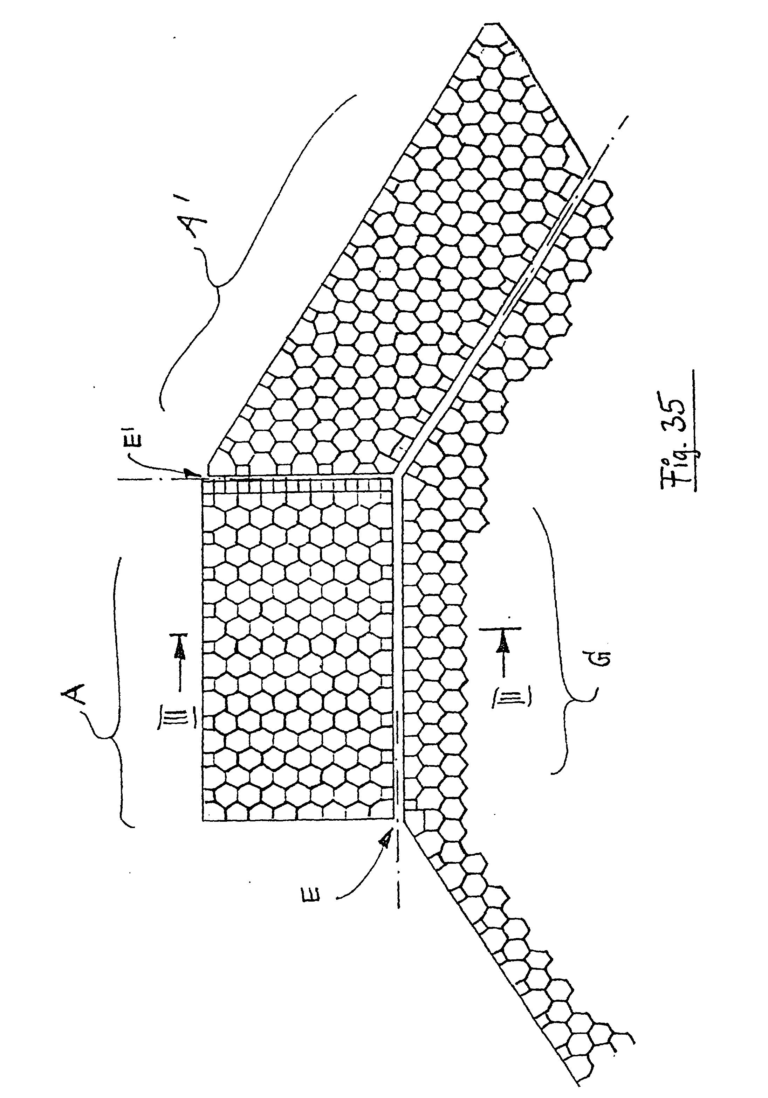

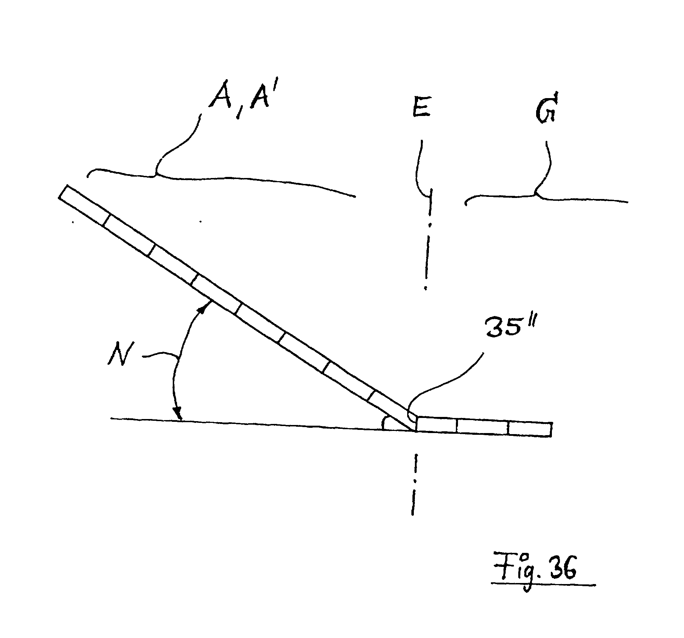

In Fig. 35 zeigt eine Draufsicht eine Pflasterung mit Teilbereichen G, A und A', wobei in Zusammenschau mit der Querschnittsdarstellung in Fig. 36 eine Einbauschräge N der Teilbereiche A, A' deutlich wird. Damit bildet dieser Bausatz mit den Bereichen G und A insgesamt einen Trog- oder Wannenaufbau. Die jeweiligen in einer Fuge E (vergrößert dargestellt in Fig. 35) aneinanderliegenden Steine unterschiedlicher Kontur sind mit der in Fig. 14 dargestellten Verlegung vergleichbar. In Zusammenschau mit Fig. 27 bzw. 28 wird deutlich, daß die Seitenflächen 34" und/oder 35'' mit ihrer Neigung 29''' so an Nachbarsteine anlegbar sind, daß ein stabiler Stützverbund im Anlagebereich der Fuge E erreicht ist und die Neigung N des Pflasterungsbereiches gebildet wird.

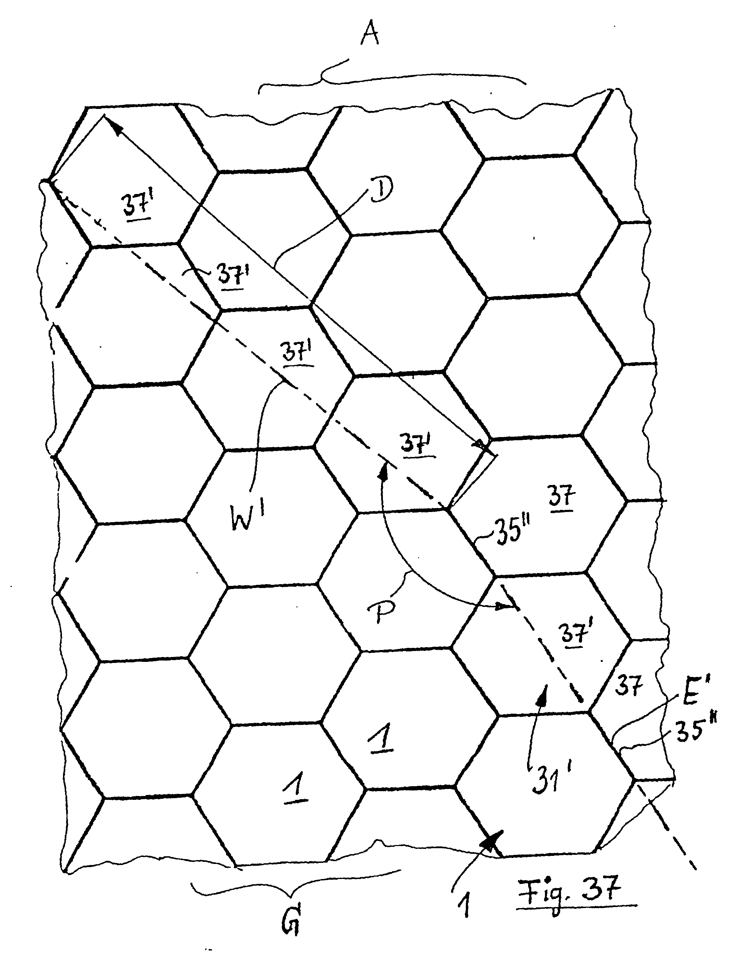

Eine weitere Möglichkeit, auf der Grundlage des vorbeschriebenen Bausatzes eine Auffangwanne o. dgl. zu bilden ist in Fig. 37 in einer Draufsicht prinzipiell verdeutlicht, wobei die als Strichlinie dargestellte Rinne W' entweder im Bereich der Seitenflächen 35" der Steine oder auf deren Oberfläche, z. B. Stein 31', vorgesehen ist. Die Rinne W verläuft dabei in einem Winkelbereich P, so daß in einem Teilabschnitt D sätmliche der in Richtung der Rinne W' verlaufenden Steine eine entsprechende Oberflächenkontur mit den Bereichen 37' aufweisen, wobei diese unterschiedliche Abmessungen aufweisen und die Rinne W' auch außermittig angeordnet ist. Damit ist die prinzipielle Ausbildung weiterer Steinformen zur Komplettierung des Bausatzes verdeutlicht.

Der Winkel P im Verlauf der Rinne W beträgt in der dargestellten Ausführungsform beispielsweise 165°, so daß der Wannenkörper insgesamt als ein 24-eckiger Körper geschaffen ist. Ebenso ist denkbar, ohne zusätzliche Schneidarbeiten mit den jeweils die Schrägung 37' aufweisenden Steinformen (Fig. 37) einen geschlossenen Wannenkörper herzustellen. Im Bereich der jeweiligen Wandungen mit der Schräge A können die Grundsteine 1 in Normalform verlegt werden. Bei einer Ausbildung des Wannenkörpers als 36-,48-,60- usw. Eck-Körper ist eine weitgehende Anpassung an eine kreisringförmige Wannenkontur erreichbar, so daß insbesondere mit diesem Bausatz ein Unterbau für Lagerhochbehälter o. dgl. geschaffen werden kann.

Die vorbeschriebene Neigung der jeweiligen Oberflächen 37' kann beispielsweise in sämtlichen Teilbereichen A, A' mit 30° bemessen sein, so daß eine geschlossen Wanne gebildet ist. Ebenso ist denkbar, die Neigung N mit weniger als 10° zu bemessen, so daß beispielsweise in einem der Teilbereiche A eine befahrbare oder begehbare Wandung für einen Trogkörper gebildet ist.

Der vorbeschriebene Aufbau des Wannenkörpers kann auch mit der in Fig.14 dargestellten Verlegeform des Bausatzes geschaffen werden, wobei an den ebenen Teilbereich G des Steines 1 umfangseitig im Bereich der jeweiligen Fuge E die Steine jeweils mit der schräggestellten Seitenfläche 35'' vorgesehen sind. Im Bereich der Fuge E' wiederholt sich dieses Verlegeschema und im Bereich der Fuge E" liegen auch Einzelsteine mit der Rinne W entsprechend im Verbund mit anderen Steinen des Bausatzes aneinander.

## Patentansprüche

1. Pflasterstein-Bausatz zur Bildung eines geschlossenflächigen Pflastersteinverbundes mit geradliniger Außenbegrenzung (2, 3, 2', 3') und rechtwinkligen oder stumpfwinkligen Ecken (4, 5), bestehend aus einem Grundstein (1) in Form eines regelmäßigen Sechsecks, dessen Randkanten eine Grundlänge (8) definieren, und aus Füll- bzw. Ausgleichssteinen verschiedener Umrißformen, die zumindest in der Länge einer Randkante oder in zumindest einem Eckwinkel übereinstimmen, wobei bei Anordnung einer stumpfwinkligen Ecke (7') in mittiger Gegenüberlage zu einer gegenüber der Grundlänge (8) in ihrer Länge vergrößerten Randkante die an diese Randkante angrenzenden Randkanten jeweils Grundlänge (8) aufweisen, **dadurch gekennzeichnet, daß** alle Füll- bzw. Ausgleichssteine (1', 11, 12, 13, 15, 17, 20, 21, 23, 24, 24') nur Eckwinkel (7, 7') von gleich oder größer 90° und zumindest eine Randkante mit einer Länge haben, die mit der Grundlänge (8) der Kanten des Grundsteins (1) übereinstimmt, einer halben Grundlänge (8') entspricht oder mit der Maulweite (9) oder einem Bruchteil der Maulweite (9', 9'', 9''') des Grundsteins (1) übereinstimmt.

2. Pflasterstein-Bausatz nach Anspruch 1, **dadurch gekennzeichnet, daß** ein erster Füll- bzw. Ausgleichsstein (11) als Rechteck ausgebildet ist, dessen eine Kantenlänge der Grundlänge (8) und dessen andere Kantenlänge der halben Maulweite (9') entspricht.

3. Pflasterstein-Bausatz nach Anspruch 1, **dadurch gekennzeichnet, daß** ein zweiter Füll- bzw. Ausgleichsstein (12) als Rechteck ausgebildet ist, dessen eine Kantenlänge der halben Grundlänge (8') und dessen andere Kantenlänge einer viertel Maulweite (9'') entspricht.

4. Pflasterstein-Bausatz nach Anspruch 1, **dadurch gekennzeichnet, daß** ein dritter Füll- bzw. Ausgleichsstein (13) als Fünfeck mit einer stumpfwinkligen Ecke (7') ausgebildet ist, die einer Randkante von der Länge der Maulweite (9) mittig gegenüberliegt, welche zwei parallele Randkanten von Grundlänge (8) verbindet.

5. Pflasterstein-Bausatz nach Anspruch 1, **dadurch gekennzeichnet, daß** ein vierter Füll- bzw. Ausgleichsstein (15) als Fünfeck mit einer stumpfwinkligen Ecke (16) ausgebildet ist, die einer Randkante von der Länge der Maulweite (9) mittig gegenüberliegt, welche zwei divergierende Randkanten von Grundlänge (8) verbindet.

6. Pflasterstein-Bausatz nach Anspruch 1, **dadurch gekennzeichnet, daß** ein fünfter Füll- bzw. Ausgleichsstein (17) als unregelmäßiges Sechseck ausgebildet ist, das durch Ergänzung eines Grundsteins (1) um zwei dreieckige Teilbereiche eine Umrißform aufweist, die aus einer Rechteck- (18) und einer gleichschenkligen Trapezfläche (19) zusammengesetzt ist.

7. Pflasterstein-Bausatz nach Anspruch 1, **dadurch gekennzeichnet, daß** ein sechster Füll- bzw. Ausgleichsstein (20) als unregelmäßiges Sechseck ausgebildet ist, das durch Ergänzung eines Grundsteins (1) um eine dreieckige Teilfläche auf einer ersten , rechten Seite eine Randkante von eineinhalbfacher Grundlänge (8") aufweist, an die sich eine Randkante mit der Länge einer halben Maulweite (9') unter einem 90°-Winkel anschließt.

8. Pflasterstein-Bausatz nach Anspruch 1, **dadurch gekennzeichnet, daß** ein siebenter Füll- bzw. Ausgleichsstein (21) als unregelmäßiges Sechseck ausgebildet ist, das durch Ergänzung eines Grundsteines (1) um eine dreieckige Teilfläche auf einer zweiten, linken Seite eine Randkante von eineinhalbfacher Grundlänge (8'') aufweist, an die sich eine Randkante mit der Länge einer halben Maulweite (9') unter einem 90°-Winkel anschließt.

9. Pflasterstein-Bausatz nach Anspruch 1, **dadurch gekennzeichnet, daß** ein achter Füll- bzw. Ausgleichsstein (23) als unregelmäßiges Fünfeck ausgebildet ist, bei dem eine erste Randkante mit der Länge einer Maulweite (9) unter rechtem Winkel an eine zweite Randkante mit einer dem dreiviertelfachen der Maulweite (9''') entsprechenden Länge angrenzt, bei dem sich an die erste Randkante mit einem 120°-Winkel eine dritte Randkante von Grundlänge (8) anschließt, bei dem sich an die zweite Randkante mit einem 90°-Winkel eine vierte Randkante mit der Länge einer halben Maulweite (9') anschließt und bei dem die dritte und die vierte Randkante durch eine fünfte Randkante verbunden sind, die mit der dritten Randkante einen Winkel von 90° und mit der vierten Randkante einen Winkel von 150° einschließt, wobei die fünfte Randkante eine dem eineinhalbfachen der Grundlänge (8'') entsprechende Länge hat.

10. Pflasterstein-Bausatz nach Anspruch 1 und 9, **dadurch gekennzeichnet, daß** ein neunter Füll- bzw. Ausgleichsstein (24) als ein unregelmäßiges Fünfeck ausgebildet ist, bei dem an die erste Randkante mit Maulweite (9) eine zweite Randkante mit Grundlänge (8) unter einem 90°-Winkel anschließt, bei dem sich an die erste Randkante unter einem 90°-Winkel eine dritte Randkante mit eineinhalbfacher Grundlänge (8'') anschließt, an diese eine vierte Randkante mit halber Maulweite (9') unter einem 90°-Winkel anschließt und bei dem die zweite und die vierte Randkante von einer fünften Randkante mit Grundlänge (8) verbunden sind.

11. Pflasterstein-Bausatz nach Anspruch 10, **dadurch gekennzeichnet, daß** ein zehnter Füll- und Ausgleichsstein (24') eine spiegelbildlich zur fünften Randkante des Steins (24) angeordnete fünfte Randkante mit Grundlänge (8) aufweist.

12. Pflasterstein-Bausatz nach einem der Ansprüche 1 bis 11, **gekennzeichnet durch** Grund- und Füll- bzw. Ausgleichssteine (1, 1', 11, 12, 13, 15, 17, 20, 21, 23, 24, 24') mit einer Oberseite, die im Querschnitt eine Dachkontur (29, 29') aufweist, deren Firstlinie (30) entlang einer Verbindungslinie von zwei Eckpunkten oder mittig zwischen zwei gegenüberliegenden Randkanten verläuft.

13. Pflasterstein-Bausatz nach einem der Ansprüche 1 bis 12, **gekennzeichnet durch** Grund- und Füll- bzw. Ausgleichssteine (1, 1', 11, 12, 13, 15, 17, 20, 21, 23, 24, 24') mit einer einzelnen Seitenfläche (34, 35) oder mehreren gegenüberliegenden Seitenflächen (34', 35'), die jeweils mit der Unterseite des Steins (32, 33) einen 90° geringfügig überschreitenden Winkel (36) einschließt.

14. Pflasterstein-Bausatz nach einem der Ansprüche 1 bis 13, **gekennzeichnet durch** Grundsteine (1') mit einer einzelnen Seitenfläche (40, 41), die mit den benachbarten Seitenflächen (40', 41') einen von 120° abweichenden Winkel (42, 43; 42', 43'; 42'', 43'') zur Bildung einer schräggestellten Anschlußfläche (44) und/oder eines Randabsatzes (44') einschließt.

15. Pflasterstein-Bausatz nach einem der Ansprüche 1 bis 14, **dadurch gekennzeichnet, daß** Grund- und Füll- bzw. Ausgleichssteine (1, 1', 11, 12, 13, 15, 17, 20, 21, 23, 24, 24'), die entlang zumindest einzelner Randkanten einen gegenüber der innenseitig angrenzenden Oberfläche (37) des Steins (32, 33) abgesenkten Oberflächenbereich (38) aufweisen.

16. Pflasterstein-Bausatz nach Anspruch 15, **dadurch gekennzeichnet, daß** die Steine allseitig abgesenkte Oberflächenbereiche (38) aufweisen.

17. Pflasterstein-Bausatz nach einem der Ansprüche 1 bis 16, **dadurch gekennzeichnet, daß** die Grund-, Füll- und/oder Ausgleichssteine (1, 1', 11, 12, 13, 15, 17, 20, 21, 23, 24, 24') im geschlossenflächigen Pflastersteinverbund an einen Rampenstein (28) mit abgesenkter Randkante (38) angrenzen.

18. Pflasterstein-Bausatz nach einem der Ansprüche 1 bis 17, **dadurch gekennzeichnet, daß** zur Einbeziehung eines kreisrunden Einbauteils in die geschlossene Fläche des Pflastersteinverbundes das Einbauteil von Formsteinen (51) unter Bildung einer geradlinigen Außenbegrenzung umgeben ist, die als nur Eckwinkel von gleich oder größer als 90° und eine Seitenfläche (53) mit einer einen Kreisbogen bildenden Kontur aufweisende Fünfecksteine (52) ausgebildet und durch jeweilige Rechtecksteine (57) als Füllstein in den Eckbereichen ergänzt sind.

19. Pflasterstein-Bausatz nach Anspruch 18, **dadurch gekennzeichnet, daß** in der Einbaulage jeweils acht Fünfecksteine (52) mit ihrer nach innen gerichteten Kreisbogenkontur einen als Innenöffnung (R) vorgesehenen Vollkreis bilden, wobei die Steine im Bereich jeweiliger Seitenhalbierenden (H) sowie im Bereich von Flächendiagonalen (D) aneinanderliegen und in den Eckbereichen der Außenbegrenzung jeweils einer der Füllsteine (57) mit quadratischer Umfangskontur eingesetzt ist.

20. Pflasterstein-Bausatz nach Anspruch 18 oder 19, **dadurch gekennzeichnet, daß** in der Innenöffnung (50) jeweilige einen asymmetrischen, verkleinerten Innenkreisring (R') bildende Bogenfüllsteine (58) aneinandergereiht sind, die zwei kreisbogenförmige (59,60) und zwei gerade Seitenflächen aufweisen.

21. Pflasterstein-Bausatz nach Anspruch 20, **dadurch gekennzeichnet, daß** der verkleinerte Innenkreis (R') asymmetrisch zum Innenkreis (R) der Fünfecksteine (52) verläuft.

## Claims

1. Paving stone kit for the formation of a closed-surface paving stone composite with straight-line outer delimitation (2, 3, 2', 3') and rectangular or obtuse-angled comers (4, 5), consisting of a base slab (1) in the form of a regular hexagon, the peripheral edges of which define a basic length (8), and filler or compensation slabs of different outline shapes, which accord at least in the length of one peripheral edge or at least in a corner angle, whereby, with the arrangement of an obtuse-angled corner (7') in the central opposed position to a peripheral edge which is extended in its length in comparison with the basic length (8), the peripheral edges adjacent to this peripheral edge in each case feature the basic length (8), **characterised in that** all the filler or compensation slabs (1', 11, 12, 13, 15, 17, 20, 21, 23, 24, 24) have only corner angles (7, 7') equal to or greater than 90°, and at least one peripheral edge with a length which accords with the basic length (8) of the edges of the basic slab (1), corresponds to half a basic length (8'), or accords with the mouth-end width (9) or a fraction of the mouth-end width (9',9'',9''') of the basic slab (1).

2. Paving stone kit according to claim 1, **characterised in that** a first filler or compensation slab (11) is designed as a rectangle, of which one edge length corresponds to the basic length (8) and the other edge length of which corresponds to half the mouth width (9').

3. Paving stone kit according to claim 1, **characterised in that** a second filler or compensation slab (12) is designed as a rectangle, of which one edge length corresponds to half the basic length (8') and the other edge length of which corresponds to quarter of the mouth width (9'').

4. Paving stone kit according to claim 1, **characterised in that** a third filler or compensation slab (13) is designed as a pentagon with an obtuse-angled corner (7'), which is located centrally opposite a peripheral edge of the length of the mouth width (9), which connects two parallel peripheral edges of basic length (8).

5. Paving stone kit according to claim 1, **characterised in that** a fourth filler or compensation slab (15) is designed as a pentagon with an obtuse-angled comer (16), which is located centrally opposite a peripheral edge of the length of the mouth width (9), which connects two divergent peripheral edges of basic length (8).

6. Paving stone kit according to claim 1, **characterised in that** a fifth filler or compensation slab (17) is designed as an irregular hexagon, which, by supplementing with a basic slab (1) about two triangular part areas, forms an outline shape which is composed of one rectangular (18) and one trapezoidal surface (19) of equal limb sizes.

7. Paving stone kit according to claim 1, **characterised in that** a sixth filler or compensation slab (20) is designed as an irregular hexagon, which, by supplementing with a basic slab (1) about one triangular part area, features on a first, right-hand side, a peripheral edge of one and a half times the basic length (8''), to which is connected a peripheral edge with the length of half a mouth width (9') at a 90° angle.

8. Paving stone kit according to claim 1, **characterised in that** a seventh filler or compensation slab (21) is designed as an irregular hexagon, which, by supplementing with a basic slab (1) about one triangular part area, features on a second, left-hand side, a peripheral edge of one and a half times the basic length (8''), to which is connected a peripheral edge with the length of half a mouth width (9') at a 90° angle.

9. Paving stone kit according to claim 1, **characterised in that** an eighth filler or compensation slab (23) is designed as an irregular pentagon, in which a first peripheral edge with the length of a mouth width (9) delimits at right angles a second peripheral edge with a length corresponding to three-quarters times the mouth width (9'''), with which a third peripheral edge of basic length (8) connects at the first peripheral edge at a 120° angle, with which a fourth peripheral edge with the length of half a mouth width (9') connects at the second peripheral edge at a 90° angle, and with which the third and fourth peripheral edges are connected by means of a fifth peripheral edge, which forms an angle of 90° with the third peripheral edge and an angle of 150° with the fourth peripheral edge, whereby the fifth peripheral edge has a length which corresponds to one and a half times the basic length (8'').

10. Paving stone kit according to claims 1 and 9, **characterised in that** a ninth filler or compensation slab (24) is designed as an irregular pentagon, in which a second peripheral edge with basic length (8) connects to a first peripheral edge with mouth width (9) at an angle of 90°, whereby a third peripheral edge with one and a half times the basic length (8'') connects to the first peripheral edge at a 90° angle, a fourth peripheral edge with half the mouth width (9') connects to this at a 90° angle, and whereby the second and fourth peripheral edges are connected by a fifth peripheral edge of basic length (8).

11. Paving stone kit according to claim 10, **characterised in that** a tenth filler or compensation slab (24') features a fifth peripheral edge of basic length (8) arranged in mirror-image to the fifth peripheral edge of the slab (24).

12. Paving stone kit according to one of claims 1 to 11, **characterised by** basic and filler or compensation slabs (1, 1', 11, 12, 13, 15, 17, 20, 21, 23, 24, 24'), with an upper face which in cross-section features a roof contour (29, 29), of which the ridge line (30) runs along a connection line of two corner points or centrally between two opposed peripheral edges.

13. Paving stone kit according to one of claims I to 12, **characterised by** basic and filler or compensation slabs (1, 1', 11, 12, 13, 15, 17, 20, 21, 23, 24, 24'), with a single side face (34, 35) or severally mutually-opposed side faces (34', 35), which in each case forms an angle with the underside of the slab (32, 33) which slightly exceeds 90°.

14. Paving stone kit according to one of claims 1 to 13, **characterised by** basic slabs (1') with a single side face (40, 41) which connects to the adjacent side faces (40', 41') at an angle deviating from 120° (42, 43; 42', 43'; 42'', 43'') to form a connection surface (44) set obliquely and/or a peripheral offset (44').

15. Paving stone kit according to one of claims 1 to 14, **characterised by** basic and filler or compensation slabs (1, 1', 11, 12, 13, 15, 17, 20, 21, 23, 24, 24'), which feature along at least individual peripheral edges a sunken surface area (38) in relation to the adjacent inside surface (37) of the slab (32, 33).

16. Paving stone kit according to claim 15, **characterised in that** the slabs feature sunken surface areas (38) on all sides.

17. Paving stone kit according to one of claims 1 to 16, **characterised in that** the basic and filler or compensation slabs (1, 1', 11, 12, 13, 15, 17, 20, 21, 23, 24, 24') in the closed surface paving stone composite delimit a ramp slab (28) with sunken peripheral edge (38).

18. Paving stone kit according to one of claims 1 to 17, **characterised in that**, in order to incorporate a circular installation element into the closed surface of the paving stone composite, the installation element is surrounded by shaped slabs (51), with the formation of a straight-line outer delimitation, which are formed as pentagonal slabs (52) featuring corner angles only equal to or greater than 90° and a side face (53) with a contour forming a circular arc, and are supplemented by rectangular slabs (57) in each case as filler slabs in the corner areas.

19. Paving stone kit according to claim 18, **characterised in that**, in the installation position, in each case eight pentagonal slabs (52) form a full circle with their circular arc contour directed inwards, provided as an internal aperture, whereby the slabs lie next to one another in the area of side-halving elements (H) or surface diagonals (D), and in the corner areas of the outer delimitation in each case one of the filling stones (57) is inserted with a square circumferential contour.

20. Paving stone kit according to claim 18 or 19, **characterised in that** arranged in rows in the inside aperture (50) in each case are arched filling slabs (58), forming an asymmetric reduced inner circular ring (R'), which feature two circular arc-shaped surfaces (59, 60) and two straight side faces.

21. Paving stone kit according to claim 20, **characterised in that** the reduced size inner circle (R') runs asymmetrically to the inner circle (R) of the hexagonal slabs (52).

## Revendications

1. Jeu d'éléments de dallage pour la formation d'un ensemble de dallage à surface fermée présentant une frontièré extérieure rectiligne (2, 3, 2', 3') et des sommets (4, 5) à angle droit ou obtus, constitué dune dalle de base (1) qui présente la forme d'un hexagone régulier dont les côtés définissent une longueur de base (8) et de dalles de remplissage ou selon le cas de compensation qui présentent différentes formes de périmètre qui correspondent au moins par la longueur d'un côté ou au moins par l'angle d'un sommet, et lors de l'agencement d'un sommet (7') à angle obtus face au centre d'un côté dont la longueur est plus longue que la longueur de base (8), les côtés adjacents à ce côté présentent tous la longueur de base (8), **caractérisé en ce que** toutes les dalles de remplissage ou selon le cas de compensation (1', 11, 12, 13, 15, 17, 20, 21, 23, 24, 24') ont uniquement des sommets (7, 7') d'un angle égal ou supérieur à 90° et au moins un côté d'une longueur qui correspond à la longueur de base (8) des côtés de la dalle de base (1), qui correspond à la moitié (8') de la longueur de base, qui correspond à la distance (9) entre deux côtés parallèles opposés ou qui correspond à une fraction (9', 9", 9"') de la distance entre deux côtés parallèles opposés de la dalle de base (1).

2. Jeu d'éléments de dallage selon la revendication 1, **caractérisé en ce qu'**une première dalle de remplissage ou selon le cas de compensation (11) est configurée en rectangle dont la longueur d'un côté correspond à la longueur de base (8) et celle de l'autre côté correspond à la moitié (9') de la distance entre deux côtés parallèles opposés.

3. Jeu d'éléments de dallage selon la revendication 1, **caractérisé en ce qu'**une deuxième dalle de remplissage ou selon le cas de compensation (12) est configurée en rectangle dont la longueur d'un côté correspond à la moitié (8') de la longueur de base et celle de l'autre côté correspond au quart (9") de la distance entre deux côtés parallèles opposés.

4. Jeu d'éléments de dallage selon la revendication 1, **caractérisé en ce qu'**une troisième dalle de remplissage ou selon le cas de compensation (13) est configurée en pentagone présentant un sommet (7') à angle obtus situé face au centre d'un côté dont la longueur est égale à la distance (9) entre deux côtés parallèles opposés et qui relie deux côtés parallèles dont la longueur vaut la longueur de base (8).

5. Jeu d'éléments de dallage selon la revendication 1, **caractérisé en ce qu'**une quatrième dalle de remplissage ou selon le cas de compensation (15) est configurée en pentagone présentant un sommet (7') à angle obtus situé face au centre d'un côté dont la longueur est égale à la distance (9) entre deux côtés parallèles opposés et qui relie deux côtés divergents dont la longueur vaut la longueur de base (8).

6. Jeu d'éléments de dallage selon la revendication 1, **caractérisé en ce qu'**une cinquième dalle de remplissage ou selon le cas de compensation (17) est configurée en hexagone irrégulier qui, lorsqu'il complète une dalle de base (1) par deux parties triangulaires, fournit un périmètre dont la forme est constituée de l'assemblage d'une surface rectangulaire (18) et d'une surface trapézoïdale (19) à côtés obliques égaux.

7. Jeu d'éléments de dallage selon la revendication 1, **caractérisé en ce qu'**une sixième dalle de remplissage ou selon le cas de compensation (20) est configurée en hexagone irrégulier qui, lorsqu'il complète une dalle de base (1) par une surface partielle triangulaire, présente sur un premier côté situé à droite un côté dont la longueur (8'') vaut une fois et demie la longueur de base et auquel un côté dont la longueur correspond à la moitié (9') de la distance entre côtés parallèles opposés se raccorde sous un angle de 90°.

8. Jeu d'éléments de dallage selon la revendication 1, **caractérisé en ce qu'**une septième dalle de remplissage ou selon le cas de compensation (21) est configurée en hexagone irrégulier qui, lorsqu'il complète une dalle de base (1) par une surface partielle triangulaire, présente sur un deuxième côté situé à gauche un côté dont la longueur (8'') vaut une fois et demie la longueur de base et auquel un côté dont la longueur correspond à la moitié (9') de la distance entre côtés parallèles opposés se raccorde sous un angle de 90°.

9. Jeu d'éléments de dallage selon la revendication 1, **caractérisé en ce qu'**une huitième dalle de remplissage ou selon le cas de compensation (23) est configurée en pentagone irrégulier dont un premier côté dont la longueur vaut la distance (9) entre deux côtés parallèles opposés est adjacent à un deuxième côté dont la longueur vaut les trois quarts (9''') de la distance entre deux côtés parallèles opposés, un troisième côté dont la longueur vaut la longueur de base (8) se raccordant au premier côté sous un angle de 120°, un quatrième côté dont la longueur vaut la moitié (9') de la distance entre deux côtés parallèles opposés se raccordant au deuxième côté sous un angle de 90°, le troisième et le quatrième côtés étant reliés par un cinquième côté qui forme un angle de 90° avec le troisième côté et un angle de 150° avec le quatrième côté, le cinquième côté ayant une longueur qui correspond à une fois et demie (8") la longueur de base.

10. Jeu d'éléments de dallage selon les revendications 1 et 9, **caractérisé en ce qu'**une neuvième dalle de remplissage ou selon le cas de compensation (24) est configurée en pentagone irrégulier dont un deuxième côté dont la longueur vaut la longueur de base (8) se raccorde sous un angle de 90° au premier côté dont la longueur vaut la distance (9) entre deux côtés parallèles opposés, un troisième côté dont la longueur vaut une fois et demie (8'') la longueur de base se raccordant au premier côté sous un angle de 90°, un quatrième côté dont la longueur vaut la moitié (9') de la distance entre deux côtés parallèles opposés se raccordant sous un angle de 90° à ce troisième côté, le deuxième et le quatrième côtés étant reliés par un cinquième côté dont la longueur vaut la longueur de base (8).

11. Jeu d'éléments de dallage selon la revendication 10, **caractérisé en ce qu'**une dixième dalle de remplissage ou selon le cas de compensation (24') présente un cinquième côté dont la longueur vaut la longueur de base (8) disposé de manière symétrique par rapport au cinquième côté de la dalle (24).

12. Jeu d'éléments de dallage selon l'une quelconque des revendications 1 à 11, **caractérisé par** des dalles de base et des dalles de remplissage ou selon le cas de compensation (1, 1', 11, 12, 13, 15, 17, 20, 21, 23, 24, 24') qui présentent un côté supérieur dont la section transversale a un contour (29, 29') en toit dont la ligne de faîte (30) s'étend le long d'une ligne qui relie deux sommets ou les milieux de deux côtés opposés.

13. Jeu d'éléments de dallage selon l'une quelconque des revendications 1 à 12, **caractérisé par** des dalles de base et des dalles de remplissage ou selon le cas de compensation (1, 1', 11, 12, 13, 15, 17, 20, 21, 23, 24, 24') qui présentent une seule surface latérale (34, 35) ou plusieurs surfaces latérales opposées (34', 35') qui forment chacune un angle (36) dépassant légèrement 90° avec le côté inférieur de la dalle (32, 33).

14. Jeu d'éléments de dallage selon l'une quelconque des revendications 1 à 13, **caractérisé par** des dalles de base (1') qui présentent une seule surface latérale (40, 41) qui forme un angle (42, 43; 42', 43'; 42'', 43'') différent de 120° avec les surfaces latérales (40', 41') voisines pour former une surface oblique de raccord (44) et/ou un gradin de bord (44').

15. Jeu d'éléments de dallage selon l'une quelconque des revendications 1 à 14, **caractérisé par** des dalles de base et des dalles de remplissage ou selon le cas de compensation (1, 1', 11, 12, 13, 15, 17, 20, 21, 23, 24, 24') qui présentent le long d'au moins certains des côtés une partie de surface (38) abaissée par rapport à la surface (37) adjacente située du côté intérieur de la dalle (32, 33).

16. Jeu d'éléments de dallage selon la revendication 15, **caractérisé en ce que** les dalles présentent sur tous leurs côtés des parties de surface abaissées (38).

17. Jeu d'éléments de dallage selon l'une quelconque des revendications 1 à 16, **caractérisé en ce que** dans un ensemble dallé de surface fermée, les dalles de base, les dalles de remplissage et/ou de compensation (1, 1', 11, 12, 13, 15, 17, 20, 21, 23, 24, 24') sont adjacentes à une dalle en pente (28) avec côté abaissé (38).

18. Jeu d'éléments de dallage selon Tune quelconque des revendications 1 à 17, **caractérisé en ce que** pour incorporer un élément de construction rond dans la surface fermée de l'ensemble dallé, l'élément de construction est entouré par des dalles (51) de manière à former une frontière extérieure rectiligne, ces dalles étant configurées en dalles pentagonales (52) présentant uniquement des sommets d'angle égal ou supérieur à 90° et une surface latérale (53) avec un contour formant un arc de cercle et étant complétées dans les zones de coin par des dalles rectangulaires (57) respectives qui servent de dalles de remplissage.

19. Jeu d'éléments de dallage selon la revendication 18, **caractérisé en ce qu'**après la pose, huit dalles pentagonales (52) forment ensemble par leur contour en arc de cercle orienté vers l'intérieur un cercle fermé formant ouverture intérieure (R), les dalles étant posées les unes contre les autres dans la région des médianes (H) de leurs côtés respectifs ainsi que dans la région des diagonales de surface (D), l'une des dalles de remplissage (57) à contour périphérique carré étant utilisée à chaque fois dans les zones de coin de la frontière extérieure.

20. Jeu d'éléments de dallage selon la revendication 18 ou 19, **caractérisé en ce que** des dalles de remplissage courbes (58) qui forment entre elles un anneau circulaire intérieur (R') asymétrique et rétréci et qui présentent deux surfaces latérales (59, 60) en arc de cercle et deux surfaces latérales rectilignes sont posées les unes contre les autres dans l'ouvertu intérieure (50).

21. Jeu d'éléments de dallage selon la revendication 20, **caractérisé en ce que** le cercle intérieur (R') rétréci s'étend asymétriquement par rapport au cercle intérieur (R) des dalles pentagonales (52).
